# EUROPÄISCHE PATENTSCHRIFT

(11) **EP 1 673 971 B1**
(45) Veröffentlichungstag und Bekanntmachung des Hinweises auf die Patenterteilung: **18.04.2007**
(21) Anmeldenummer: 05017880.5
(22) Anmeldetag: 17.08.2005
(51) Int. Cl.: A01K 1/015

(54) **Betonplatten mit Struktur für einen Stallboden und ein diese Platten umfassender Stall**
Concrete slabs with stucture for a stable floor and stable comprising said slabs
Panneaux de béton avec structure pour le sol d'une étable, et étable comprenant lesdits panneaux

(30) Priorität: 21.12.2004 DE 102004061546
(43) Veröffentlichungstag der Anmeldung: 28.06.2006
(73) Patentinhaber: Hartmann Grundbesitz GmbH & Co. KG, 92265 Edelsfeld (DE)
(72) Erfinder: Hartmann, Hans, 92265 Edelsfeld (DE)
(74) Vertreter: Böhm, Thomas

(56) Entgegenhaltungen:
- EP-A- 0 626 131
- WO-A-03/043412
- GB-A- 2 185 213
- US-A1- 2004 020 445

## Beschreibung

Die vorliegende Erfindung betrifft Betonplatten mit einer an den durch Skelett- und Körperbau vorgegebenen Gang der Tiere angepassten Oberfläche mit Struktur, insbesondere Fertigbetonplatten, die einen Stallboden bilden, einen solchen Stallboden und einen Stall, der solche Betonplatten umfasst, sowie ein Verfahren zur Herstellung eines solchen Stalls.

Es ist bekannt, einen Stallboden, insbesondere einen Laufgang, mit einer Stallentmistungsanlage von den Exkrementen, insbesondere Harn und Kot, von Tieren in diesem Stall zu reinigen. Bekannte Stallentmistungsanlage sind z.B. offenbart in DE 197 06 073 C2, DE 101 17 077 C1 und DE 101 11 908 A1 von Hartmann. Solche Stallentmistungsanlagen weisen einen Mistschieber auf, der durch ein Seil auf dem Laufgang von einem Ende zum anderen Ende hin- und herbewegt wird und dazu eingerichtet ist Flüssigkeiten von dem Laufgang zu entfernen.

Die WO 03/043412 A1 offenbart eine Bodenplatte aus einem Verbundmaterial aus Gummischnitzeln/Gummigranulat/Gummiteilchen, das durch einen Klebstoff zusammengebunden wird, für einen Stall für Rinder. Diese Bodenplatte weist Vertiefungen mit einer Breite auf, die im Wesentlichen einer Klauenbreite in Laufrichtung der Rinder entspricht, wobei die Vertiefungen auf der Platte solche Abstände voneinander aufweisen, dass ein Rind im Wesentlichen bei jedem Schritt mit einer Klaue in eine Vertiefung treten kann, wobei die Vertiefungen eine Tiefe von 5 mm aufweisen.

Aus der EP 0 626 131 A1 ist der Gebrauch von Betonplatten beim Aufbau eines Stallbodens bekannt.

Ferner ist bekannt, die Liegeboxen mit Liegemulden in einem Stall für Tiere, insbesondere Rinder, als Fertigbetonteile herzustellen. Damit kann ein Stall vorteilhaft schnell gebaut werden. Dies ist zum Beispiel aus der Offenlegungsschrift DE 101 09 811 A1 von Hartmann bekannt. Der Laufgang eines solchen Stalls wird aus Beton gegossen. Zuvor wurden Laufgänge auch aus Gussasphalt hergestellt, doch ist dieser nicht so lange haltbar wie ein Betonboden und kostenintensiver. Der Einsatz eines Laufgangs, der aus vergossenem Beton hergestellt, also betoniert wird, hat den Vorteil, dass er undurchlässig ist für Flüssigkeiten, insbesondere den Harn und die Fäkalien, die von den Tieren abgeschieden werden. Außerdem ist eine solche gegossene Betonplatte stabil, um von einem Fahrzeug befahren werden zu können. Der Laufgang eines Stalls wird regelmäßig mit einem Fahrzeug befahren, z.B. einem Einstreuwagen. Andererseits besitzt das Betonieren des Laufgangs den Nachteil, dass dieser Vorgang gegenüber einem Verlegen von Fertigbetonteilen länger dauert und aufwändiger ist mit mehr Arbeitsschritten. Eine betonierter Laufgang hat außerdem den Nachteil, dass die Oberfläche nach dem Betonieren schnell glatt wird. Bei Ställen mit Böden aus herkömmlich vergossenem Beton wird dieses Problem noch dadurch verstärkt, dass schon nach kurzer Zeit des Betriebs, d.h. schon nach 3 bis 4 Jahren, wegen der Beanspruchung mit Harnsäure aus dem von den Tieren abgeschiedenen Harn, der Betonboden noch glatter wird. Eine glatte Oberfläche eines Laufgangs hat den großen Nachteil, dass sich viele Tiere in dem Stall nur vorsichtig und mit kleinen Schritten über den Laufgang bewegen. Dies kann zu Ängstlichkeit bei den Tieren führen, sowie zu reduzierter Nahrungsaufnahme, da sich die Tiere nur ängstlich und weniger oft von den Liegemulden zum Futtertisch bewegen. Der Fleischertrag und/oder die Milchproduktion können darunter stark leiden. Außerdem kann dies zu Lahmheit und stiller Brunst bei diesen Tieren führen, was ebenso nachteilig für die Gesundheit der Tiere und den Ertrag mit diesen Tieren ist. Darüber hinaus kann es bei Tieren in der Brunst dazu kommen, dass sie ihre Vorsichtigkeit ablegen und sich zu schnell über den glatten Boden bewegen. Daher besteht die Gefahr, dass solche Tiere auf dem glatten Boden ausrutschen und sich Knochenbrüche zuziehen, insbesondere Bein- und Hüftbrüche, sodass diese Tiere notgeschlachtet werden müssen. Einen durch Vergießen von Beton hergestellten glatten Betonboden griffig zu machen ist jedoch aufwändig, insbesondere zeit- und kostenintensiv. Es wurde daher zwar schon versucht, einen Laufgang aus Betonfertigplatten herzustellen, die eine mit Vertiefungen versehene Oberfläche aufweisen. Jedoch sind die Vertiefungen in den bekannten Betonplatten nicht an die Tiere angepasst, so dass sich die Tiere daran leicht verletzen können. Ferner ist auch ein Spaltenboden bekannt, der Vertiefungen mit einer Breite von 5 cm aufweist. Jedoch können sich Tiere, insbesondere Rinder an den Kanten des Spaltenbodens verletzen. Die Vertiefungen mit 5 cm Breite auf dem bekannten Spaltenboden sind sehr weit voneinander beabstandet. Der Abstand ist so groß, dass die Rinder nicht bei jedem Schritt mit einer Klaue in eine Vertiefung treten können. Daher kann ein Rind trotz dieser Vertiefungen seitlich mit einem Bein und in der Folge insgesamt seitlich wegrutschen. Von ihrem Körper- und Skelettaufbau neigen insbesondere Rinder dazu auf einem glatten Boden in Laufrichtung seitlich wegzurutschen. Wenn man berücksichtigt, dass Rinder ein hohes Körpergewicht besitzen, ein ausgewachsenes Tier kann bis zu 800 kg und mehr wiegen, werden die Klauen, Gelenke und Bänder der Beine der Tiere stark beansprucht, wenn sie auf einem Boden mit Vertiefungen gegen die Seitenwände der Vertiefungen rutschen, um Halt zu finden. Insbesondere können sich die Tiere die Klauen an den Kanten von Vertiefungen, die sehr tief sind, insbesondere einem Spaltenboden, leicht verletzen. Diese Verletzungsmöglichkeiten können zu Lahmheit und in der Folge zu verringerter Nahrungsaufnahme und daher zu reduzierter Milch- und/oder Fleischproduktion führen.

Die Aufgabe der vorliegenden Erfindung ist es daher die Nachteile aus dem Stand der Technik zu vermeiden, insbesondere soll eine Betonplatte für einen verbesserten Stallboden, ein diese Betonplatte umfassender Stallboden und Stall sowie ein vereinfachtes Verfahren zur Herstellung eines Stalls bereitgestellt werden, wobei die Verletzungsmöglichkeiten von Tieren, insbesondere Rindern, vermieden und ihre Gesundheit und ihr Wohlbefinden verbessert werden. Insbesondere soll einer Lahmheit der Tiere sowie verminderter Milch- oder Fleischproduktion vorgebeugt werden.

Diese Aufgabe wird durch die Betonplatte nach Anspruch 1, den Stallboden nach Anspruch 8, den Stall nach Anspruch 10 und das Verfahren zur Herstellung des Stalls nach Anspruch 11 gelöst. Weitere vorteilhafte Ausführungsformen finden sich in den jeweiligen Unteransprüchen.

Erfindungsgemäß wird eine Betonplatte für einen Stallboden mit einer Oberfläche geschaffen, die an den durch den Körper- und Skelettbau vorgegebenen Gang von Vierbeinern, insbesondere Huftieren, vorzugsweise Rindern, angepasst ist. Sie weist Vertiefungen mit einer Breite auf, die im Wesentlichen einer halben Fußbreite, d.h. im Wesentlichen einer Klauenbreite, in Laufrichtung der Tiere, vorzugsweise Rindern, entspricht. Dadurch finden die Tiere in den Vertiefungen mit der Hälfte eines Fußes, vorzugsweise mit einer ihrer Klauen, genügend Halt und rutschen in Laufrichtung seitlich im Wesentlichen nicht weg. Sie können, wenn überhaupt, nur geringfügig gegen eine Seitenwand der Vertiefung rutschen. Damit werden Verletzungen an der Klaue im Wesentlichen vermieden. Außerdem werden die Bänder und Gelenke geschont, und die Gesundheit und Ertragsmöglichkeiten bei der Tierhaltung mit den Tieren werden verbessert. Dies kann in einem zufriedenstellendem Ausmaß erreicht werden, wenn die Vertiefungen auf der Betonplatte solche Abstände voneinander aufweisen, dass ein Rind im Wesentlichen bei jedem Schritt mit einem Fuß, vorzugsweise einer Klaue, in eine Vertiefung treten kann. Die Betonplatten werden vorzugsweise so in dem Stall verlegt, dass die Länge der Vertiefungen den durch einen Laufgang vorgegebenen bevorzugten Laufrichtungen der Rinder auf diesem Laufgang entspricht. Die von den meisten Tieren bevorzugten Laufrichtungen auf einem Laufgang können je nach Stallbereich verschieden sein.

Gemäß einer bevorzugten Ausführungsform weisen die Vertiefungen eine Länge auf, die größer ist als die Klauenlänge von Rindern in Laufrichtung, und vorzugsweise bis zu etwa die 2,5-fache, besonders bevorzugt bis zu etwa die 1,5-fache, Länge der Auftrittsfläche der Klaue der Rinder in Laufrichtung beträgt. Damit wird besonders vorteilhaft erreicht, dass ein Tier mit der gesamten Länge der Klaue in die Vertiefung treten kann ohne mit der Klaue an der Spitze oder dem hinteren Teil der Klaue an oder auf eine Kante der Vertiefung zu stoßen. Ein Wegrutschen in Längsrichtung tritt insbesondere bei Rindern wegen ihres Körper- und Skelettbaus und ihres sich daraus ergebenden Laufstils in der Regel nicht auf.

Besonders bevorzugt sind die Vertiefungen an ausgewachsene Rinder angepasst, da hier die Probleme der Beanspruchung von Gelenken und Bändern und auch der Klauen wegen des im Vergleich zu kleineren und leichteren Tieren größeren Gewichts stärker hervortritt. Außerdem ist Wertverlust höher, wenn ein ausgewachsenes Tier wegen eines Knochenbruchs notgeschlachtet werden muss und dann zum Beispiel für eine Milchproduktion ausfällt. Die Vertiefungen können aber auch an kleinere und andere Tiere als Rinder angepasst sein oder an Kälber. Dies ist in der Regel auch leicht möglich da andere Tiere und zum Teil auch Jungtiere in anderen Ställen oder Stallteilen untergebracht werden, und dort der Stallboden entsprechend an die jeweiligen Tiere angepasst werden kann. Bei einer besonders bevorzugten Ausführungsform der Erfindung weist ein Stall verschiedene Bereiche für die verschiedenartigen oder verschieden alten Tiere auf. Bei einer besonders vorteilhaften Ausführungsform können die Vertiefungen eine Breite von 5 bis 8 cm, vorzugsweise 5,5 bis 7,5 cm, besonders bevorzugt etwa 6,5 cm, aufweisen. Außerdem können die Vertiefungen eine Länge von 13 bis 17 cm, vorzugsweise etwa 15 cm, aufweisen. Besonders bevorzugt sind die Vertiefungen durch Stege voneinander getrennt, die eine Breite von etwa 3 bis 9 cm, vorzugsweise 5 bis 7 cm, aufweisen.

Besonders vorteilhaft können die Vertiefungen eine Tiefe von 3 bis 15 mm, vorzugsweise 3 bis 10, besonders bevorzugt 3 bis 8, am meisten bevorzugt 3 bis 5, z.B. etwa 4 mm, aufweisen. Damit kann erreicht werden dass die Verletzungsgefahr der Klauen noch weiter reduziert ist. Noch vorteilhafter können die Vertiefungen abgeschrägte Seitenwände besitzen. Dadurch können die Tiere leichter in die Vertiefungen hineinrutschen und auch wieder heraussteigen. Besonders vorteilhaft sind die Längsseitenwände einfach abgeschrägt und weisen vorzugsweise gegenüber der Vertikalen eine Neigung von 10° bis 30°, vorzugsweise etwa 20°, auf. Dadurch wird besonders vorteilhaft ein seitlicher Halt in Laufrichtung der Tiere erreicht. Ferner wird durch die Abschrägung der Seitenwände das Verletzungsrisiko auch bei einem Rutschen der Tiere gegen die abgeschrägte Seitenwand verringert. Die Seitenwände in der Breitenerstreckung können zweifach abgeschrägt und vorzugsweise gegenüber der Vertikalen eine erste Neigung von 10° bis 40°, vorzugsweise etwa 25°, und eine zweite Neigung von 60° bis 80°, vorzugsweise etwa 72° aufweisen. In Laufrichtung und entsprechender Längsrichtung der Vertiefung ist ein Rutschen insbesondere bei Rindern unwahrscheinlich. Besonders vorteilhaft sind die Vertiefungen versetzt zueinander angeordnet. Bei einer besonders bevorzugten Ausführungsform ist die Anzahl und der Abstand der Vertiefungen so gewählt, dass die Tiere bei einem normalen Gang bei jedem Schritt mit einer Klaue in eine Vertiefung treten können.

Besonders bevorzugt weist eine erfindungsgemäße Betonplatte eine Ausnehmung zur Aufnahme eines Seils einer Stallentmistungsanlage auf. Damit kann der Stallboden besonders leicht und einfach von den Exkrementen der Tiere gereinigt werden und eine Glättebildung durch ein Festsetzen von Harnstein vermieden werden. Besonders vorteilhaft ist der Einsatz einer Stallentmistungsanlage, wenn die Vertiefungen zweifach abgeschrägte Seitenwände in Breitenerstreckung haben, und die Betonplatten mit Vertiefungen so angeordnet sind, dass in der Längsrichtung der Vertiefung auch die Räumrichtungen eines Mistschiebers einer Stallentmistungsanlage verlaufen. In dieser Richtung der Räumrichtung eines Mistschiebers auf einem Laufgang eines Stalls verlaufen auch die bevorzugten Laufrichtungen der Rinder auf dem Laufgang. Daher ist diese Ausrichtung der Betonplatten mit den Vertiefungen besonders bevorzugt. Dadurch kann nämlich durch Stroh, das als Einstreu in den Liegemulden verteilt wird und von den Tieren in den Laufgang geschleppt wird, zusammen mit dem Mistschieber eine zusätzliche Reinigung der Laufgangplatten, insbesondere der Vertiefungen auf der Oberfläche, erfolgen. Besonders vorteilhafte Stallentmistungsanlagen sind z.B. in DE 197 06 073 C2, DE 101 17 077 C1 und DE 101 11 908 A1 von Hartmann offenbart. Solche Stallentmistungsanlagen weisen einen Mistschieber auf, der durch ein Seil auf einem Laufgang von einem Ende zum anderen Ende hin- und herbewegt wird und dazu eingerichtet ist, Flüssigkeiten von dem Laufgang zu entfernen. Besonders bevorzugt weisen die Mistschieber zusätzlich Borsten oder andere Reinigungselemente, wie Gummilippen auf, die in Räumrichtung eines Mistschiebers hinter der Räumklappe angeordnet sind und in die Vertiefungen in der Oberfläche der Laufgangplatten hineinragen können. Dadurch kann ein Laufgang besonders sauber gereinigt werden, und die hygienischen Verhältnisse in dem Stall verbessert werden.

Besonders vorteilhaft kann eine erfindungsgemäße Betonplatte dazu eingerichtet sein mit einer Liegemuldenplatte und/oder einem Futtertisch verbindbar zu sein.

Bevorzugt weist eine erfindungsgemäße Betonplatte an der Seite, mit der sie nach einem Verlegen mit einer weiteren Betonplatte zusammenstößt, einen Vorsprung auf, der von einer Ausnehmung in der weiteren Betonplatte aufgenommen wird. Besonders bevorzugt weist sie nach einem Verlegen mit der weiteren Betonplatte, mit der sie zusammenstößt, eine Ausnehmung auf, die einen Vorsprung von der weiteren Betonplatte aufnimmt. Besonders bevorzugt sind zusammen stoßende, nebeneinander und/oder hintereinander verlegbare Betonplatten formschlüssig ausgebildet.

Ein erfindungsgemäßer Stallboden umfasst mindestens eine der oben beschriebenen Betonplatten. Besonders bevorzugt weist er nach einem Verlegen der Betonplatten auf einem Unterboden, einen Kanal zur Aufnahme eines Seils einer Stallentmistungsanlage auf. Eine besonders bevorzugte Ausführungsform der Erfindung umfasst einen Stallboden, der mit einer der oben genannten Stallentmistungsanlagen gereinigt wird.

Eine bevorzugte Ausführungsform des Stallbodens umfasst Liegemuldenplatten aus Beton mit Liegemulden für Tiere, wobei die Betonplatten, die mit den Liegemuldenplatten zusammen stoßen, mit diesen Liegemuldenplatten verbindbar sind. Besonders bevorzugt sind die Liegemuldenplatten und Betonplatten auf einer gemeinsamen im Wesentlichen planen Fläche verlegt. Somit ist der Stallboden nach dem Verbinden der Betonplatten, die mit den Liegemuldenplatten zusammen stoßen im Allgemeinen auch mit einem Fahrzeug befahrbar und dabei so dicht ist, dass eine Flüssigkeit im Wesentlichen nicht durch den Stallboden sickert.

Besonders bevorzugt weisen die Betonplatten an den Seiten, mit denen sie nach dem Verlegen zusammen stoßen, ineinandergreifende Vorsprünge und/oder Ausnehmungen auf.

Besonders bevorzugt bilden die zusammen stoßenden Seiten von Betonplatten, die einen Laufgang bilden, einen Kanal zur Aufnahme eines Seils einer Stallentmistungsanlage.

Der erfindungsgemäße Stallboden umfasst vorzugsweise mindestens einen Laufgang zwischen zwei Reihen von Liegemulden für Tiere und/oder zwischen einer Reihe von Liegemulden für Tiere und einem Futtertisch.

Besonders bevorzugt umfasst der Stallboden die Betonplatten als Laufgangplatten, die nach einem Verlegen mit Liegemuldenplatten und/oder einem Futtertisch verbindbar sind.

Besonders bevorzugt können auch die Laufgangplatten und gegebenenfalls auch die Liegemuldenplatten, vorzugsweise in den Liegemulden die oben beschriebenen Vertiefungen auf der begehbaren Oberfläche aufweisen. Ein solches Betonfertigteilesystem für einen Stallboden umfasst folgendes:
(a) Laufgangplatten aus Beton für einen Laufgang und
(b) Liegemuldenplatten aus Beton mit Liegemulden für Tiere,
wobei die Laufgangplatten und Liegemuldenplatten auf einer gemeinsamen im Wesentlichen planen Fläche verlegbar sind, und die Liegemuldenplatten mit den Laufgangplatten, mit denen sie nach einem Verlegen zusammen stoßen, verbindbar sind.

Damit kann ein Stall einfacher und schneller hergestellt werden, da für die Verlegung der Laufgangplatten und Liegemuldenplatten nur eine gemeinsame Fläche bereitgestellt werden muss. Diese gemeinsame Fläche kann einfacher und schneller planiert werden. Sämtliche Arbeitsschritte zur Schaffung von Gräben für tiefer als die Liegemuldenplatten zu verlegende Laufgangplatten entfallen. Da die Liegemuldenplatten mit den Laufgangplatten, mit denen sie nach einem Verlegen zusammen stoßen, verbindbar sind, gibt es keine Dichtigkeitsprobleme zwischen den Liegemulden und dem Laufgang aus Laufgangplatten. Die Dichtigkeit eines Laufgangs von einem Stallboden, der durch dieses System bereitgestellt wird, ist konstruktiv verbessert durch die Verlegung der Laufgangplatten und Liegemuldenplatten auf einer gemeinsamen Fläche, so dass die Laufgangplatten nicht einseitig durch die Liegemuldenplatten beschwert werden, und dadurch dass die Liegemuldenplatten mit den anstoßenden Laufgangplatten verbindbar sind.

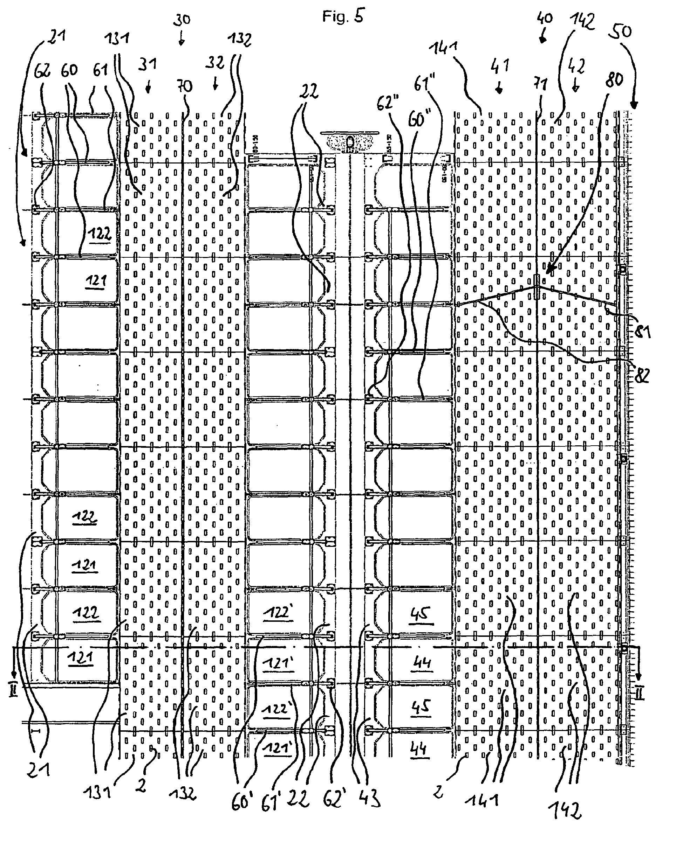

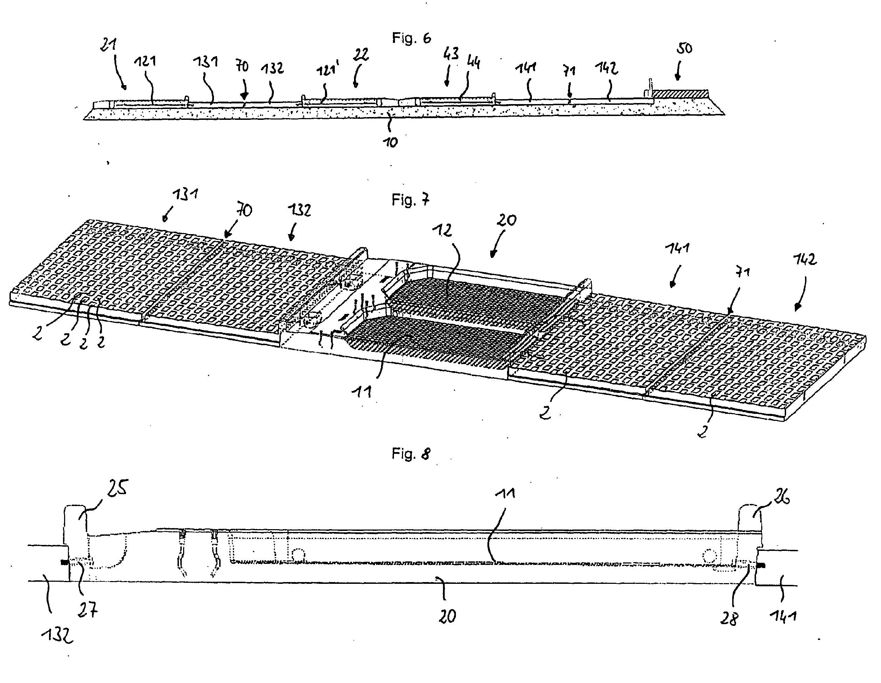

Besonders bevorzugt umfasst das Betonfertigteilesystem weitere Laufgangplatten, die nach einem Verlegen mit einem Futtertisch verbindbar sind. Damit kann ein Betonfertigteilesystem für einen Laufgang insbesondere zwei zusammen stoßende, nebeneinander verlegbare Reihen von jeweils zusammen stoßenden, hintereinander verlegbaren Laufgangplatten umfassen. So kann die Breite eines Laufgangs variabel gestaltet werden, und ein Aufbau aus Fertigbetonplatten auf einfache Weise gewährleistet werden. Die erfindungsgemäßen Laufgangplatten sollen nämlich nicht viel breiter als 4 m sein, da sonst die Verlegung der Betonplatten zu aufwändig wird. Die Breite der erfindungsgemäßen Platten, aus der sich wie in den Figuren 5 und 6 gezeigt der Abstand zwischen zwei Reihen von Liegemulden bzw. der Abstand zwischen einer Reihe von Liegemulden und dem Futtertisch ergibt, kann beliebig groß gestaltet werden, jeweils nach den Bedürfnissen, die für einen bestimmten Stall gewünscht werden. Die Breite einer Platte beträgt für eine schnelle Verlegung und für eine ausreichende Stabilität des Laufgangs insbesondere hinsichtlich einer Befahrbarkeit mit einem Fahrzeug jedoch vorzugsweise mindestens 50 cm, besonders bevorzugt mindestens 1 m, ganz besonders bevorzugt mindestens 1,50 m. Die Platten können aber auch noch breiter sein, sollten jedoch nicht breiter als 4 m sein wie oben beschrieben.

Besonders bevorzugt ist jede Laufgangplatte von einer der zwei oben beschriebenen Reihen mit der Laufgangplatte der anderen Reihe, mit der sie nach einem Verlegen zusammenstößt, verbindbar. Dazu können die Laufgangplatten von jeder der zwei Reihen jeweils mindestens eine Ausnehmung zur Aufnahme eines Verbindungselements aufweisen. Besonders bevorzugt, weisen diese Laufgangplatten jeweils zwei Ausnehmungen zur Aufnahme eines Verbindungselements auf. Diese Ausnehmungen sind vorzugsweise, an den Seiten der Laufgangplatten angeordnet, an denen die Laufgangplatten mit einer Laufgangplatte ihrer Reihe zusammen stoßen. Damit ist die Zugänglichkeit gewährleistet, selbst wenn die Ausnehmungen an der der im Wesentlichen planen Fläche zugewandten Unterseite angeordnet sind. Dies ist bevorzugt, da somit kein weiteres Dichtigkeitsproblem geschaffen, sondern vermieden wird.

Gemäß einer besonders vorteilhaften Ausführungsform ist jede Laufgangplatte der zwei Reihen nach einem Verlegen mit zwei Liegemuldenplatten oder dem Futtertisch verbindbar. Damit wird die Dichtigkeit des Laufgangs weiter verbessert. Denn damit sind auch zwei hintereinander verlegbare und nach einem Verlegen zusammen stoßende Laufgangplatten einer Reihe mit einer Laufgangplatte oder mit dem Futtertisch verbindbar. Dadurch wird die Dichtigkeit der in einer Reihe hintereinander verlegten, zusammen stoßenden Laufgangplatten eines Laufgangs von einem erfindungsgemäßen Stallboden vorteilhaft erhöht, wenn die verbindbaren Platten verbunden sind.

Gemäß einer bevorzugten Ausführungsform ist ein Laufgang, nach einem Verlegen der Laufgangplatten und Liegemuldenplatten und einem Verbinden der Laufgangplatten mit den Liegemuldenplatten, mit denen sie zusammen stoßen, gegebenenfalls nach einem Verbinden der weiteren Laufgangplatten mit dem Futtertisch, und vorzugsweise nach einem Verbinden der Laufgangplatten der zwei Reihen miteinander, mit einem Fahrzeug befahrbar und dabei so dicht ist, dass eine Flüssigkeit im Wesentlichen nicht durch den Laufgang in die im Wesentlichen plane Fläche sickert. Dies wird an den Seiten des Laufgangs zwischen Laufgangplatten und Liegemuldenplatten und gegebenenfalls zwischen Liegemuldenplatten und Futtertisch dadurch gewährleistet, dass die Laufgangplatten mit den Liegemuldenplatten und gegebenenfalls mit dem Futtertisch verbindbar ausgebildet sind, und die Laufgangplatten und Liegemuldenplatten auf einer gemeinsamen im Wesentlichen planen Fläche verlegt sind. Damit lastet das Gewicht der Liegemuldenplatten, gegebenenfalls zusätzlich mit dem Gewicht von ein oder zwei Tieren, nicht einseitig auf den Laufgangplatten. Zur bevorzugten weiteren Erhöhung der Dichtigkeit werden die zwei Reihen von Laufgangplatten die nebeneinander verlegt sind und zusammen stoßen miteinander verbunden. Wenn eine Laufgangplatte mit jeweils zwei Liegemuldenplatten oder einem Futtertisch verbunden wird, wird die Dichtigkeit der hintereinander in einer Reihe verlegten, zusammen stoßenden Laufgangplatten noch zusätzlich erhöht.

Die Liegemuldenplatten können auch mit Laufgangplatten von zwei Laufgängen verbindbar sein. Dies kann erforderlich sein, wenn die Fläche auf welcher der Stall errichtet wird begrenzt ist, und es nicht möglich ist, dass zwei Reihen von hintereinander verlegten Liegemuldenplatten zusammen stoßen.

Für eine besonders dichte Ausgestaltung des Laufgangs können die Laufgangplatten an den Seiten, mit denen sie nach dem Verlegen untereinander zusammen stoßen, ineinandergreifende, vorzugsweise überlappende, besonders bevorzugt formschlüssige, Vorsprünge und/oder Ausnehmungen aufweisen.

Gemäß einer besonders bevorzugten Ausführungsform wird ein Laufgang mit einer Stallentmistungsanlage gereinigt. Besonders vorteilhaft weisen die zwei Reihen von Laufgangplatten einen Kanal zur Aufnahme eines Seils einer Stallentmistungsanlage auf. Besonders vorteilhaft bilden die zwei Reihen von Laufgangplatten den Kanal. Besonders vorteilhaft weisen die Laufgangplatten in dem Kanal eine oder mehr Ausnehmung(en) zur Aufnahme von einem Auflageklotz oder mehr Auflageklötzen für das Seil einer Stallentmistungsanlage auf. Besonders bevorzugt weist der Kanal, wenn er von den zwei Reihen von Laufgangplatten, wie oben beschrieben gebildet wird, zur verbesserten Abdichtung eine halbrunde Form am Boden des Kanals zur Aufnahme einer Rundschnur auf. Die Vertiefung des Kanals ist vorzugsweise so ausgestaltet, dass die Rundschnur oberhalb mit einer Vergussmasse zur Ausbildung einer Zweiflankendichtung abgedichtet werden kann.

Eine besonders vorteilhafte Stallentmistungsanlage ist z.B. in DE 197 06 073 C2, DE 101 17 077 C1 und DE 101 11 908 A1 von Hartmann offenbart. Der Kanal zur Aufnahme des Seils ist vorzugsweise zur Oberfläche des Stallbodens, die auch eine für ein Fahrzeug befahrbare Oberfläche bilden kann, hin offen. So ist es vorteilhaft möglich, dass das Seil beim Betrieb der Stallentmistungsanlage, wenn es unter Spannung steht, aus dem Kanal herausgehoben wird und ohne Widerstand und Verschleiß benutzt wird. Nach dem Betrieb der Stallentmistungsanlage, wenn das Seil nicht mehr unter Zugspannung steht, kann es vollständig in dem Kanal aufgenommen werden und stellt so kein Hindernis und Verletzungsrisiko für die Tiere dar, die in dem Stall umherlaufen. Dadurch kann erreicht werden, dass das Seil der Stallentmistungsanlage nicht ständig unter Zugbeanspruchung stehen muss. Damit wird auch die Langlebigkeit der Stallentmistungsanlage vorteilhaft erhöht. Besonders vorteilhaft kann der Kanal auch der Führung des durch das Seil hin- und herbewegten Mistschiebers der Stallentmistungsanlage dienen. Bei langen Laufgängen mit mehr als 20 m Länge kann es nicht vermieden werden, dass selbst ein unter Spannung stehendes Seil etwas durchhängt, so dass es den Stallboden berühren kann. Dieses Durchhängen ist dann aber sehr problematisch, da das Seil, dann beim Betrieb der Stallentmistungsanlage wie eine Säge mit dem Seil auf den Stallboden einwirkt. Dadurch wird einerseits die Struktur des Bodens zerstört, was zu Undichtigkeiten führen kann, andererseits wird das Seil schneller verschlissen, so dass sich die Wartungsintervalle und der Arbeitsaufwand für die Stallentmistungsanlage erhöht. Daher ist es besonders bevorzugt, dass die Laufgangplatten und/oder die weiteren Laufgangplatten eine oder mehrere Ausnehmung(en) zur Aufnahme von einem Auflageklotz oder mehr Auflageklötzen für das Seil einer Stallentmistungsanlage aufweist. Dadurch kann vermieden werden, dass durch die Hin- und Herbewegung des Seils der Stallentmistungsanlage, das in der Regel als Stahlseil, besonders bevorzugt aus einem nicht rostenden und säurebeständigen Stahl, wie Nirosta^{®}, ausgelegt ist, Furchen in den Betonboden des Stalls gerieben werden. Die Auflageklötze werden vorzugsweise so über die Länge des Kanals verteilt in dem Kanal angeordnet, dass das Seil der Stallentmistungsanlage, insbesondere im gespannten Zustand, nur auf den Auflageklötzen aufliegt. Die Auflageklötze können aus einem Material mit erhöhter Abriebsfestigkeit bestehen, besonders bevorzugt aber auch aus einem anderen Material mit wenig Widerstand für das Seil, um dieses vor Abnutzung und einem Reißen zu schützen. Am meisten bevorzugt bestehen die Klötze aus Holz. Die Klötze können nämlich vorteilhaft leicht und einfach aus den in den Laufbodenplatten vorgesehenen Ausnehmungen herausgenommen und wieder eingesetzt werden, so dass der Austausch von verschlissenen Auflageklötzen problemlos erfolgen kann. Ferner nutzt das Holz das Seil nicht sonderlich ab, so dass dessen Haltbarkeit und Betriebsdauer erhöht wird.
Zur Verbesserung der Dichtigkeit können die Laufgangplatten ein Quellband aufweisen, vorzugsweise an jeder Seite an der die Laufgangplatten mit einer anderen Laufgangplatte nach dem Verlegen zusammen stoßen.

Besonders vorteilhaft weisen die Liegemuldenplatten an den Seiten, an denen sie mit Laufgangplatten zusammen stoßen, einen in die Liegemuldenplatten, vorzugsweise Mulden, hineinreichenden Durchgang auf, durch den sie mit einem Befestigungsmittel, vorzugsweise einer Schraube, mit den Laufgangplatten verbindbar sind. Somit kann die Verbindung und die Dichtigkeit durch einfache Montage gewährleistet werden, und das Verfahren zur Herstellung eines erfindungsgemäßen Stalls wird ebenfalls vereinfacht. Insbesondere können erst alle Laufgangplatten und Liegemuldenplatten für einen Stall verlegt und dann die Liegemuldenplatten mit den Laufgangplatten verbunden werden.

Nach einem Verbinden mit einem Befestigungsmittel, das auch ein Bolzen sein kann, der in den Durchgang geschlagen wird, kann der Durchgang für eine vorteilhafte Abdichtung mit einer Vergussmasse verschlossen werden.

Vorzugsweise besitzen die Liegemuldenplatten an den Seiten, an denen sie mit Laufgangplatten zusammen stoßen, einen über die Laufgangplatten hinausragenden Rand. Die Tiere müssen, dann zwar über diesen Rand steigen, wenn sie von ihrer Liegemulde auf den Laufgang wollen und umgekehrt, der Rand kann jedoch vorteilhaft als Anlagefläche für die Schieberarme eines Mistschiebers einer oben beschriebenen Stallentmistungsanlage dienen. So kann aber der Stall, Stallboden und Laufgang auf einfache Weise, und besonders vorteilhaft automatisch und regelmäßig von Urin und Kot befreit werden. Damit werden die hygienischen Verhältnisse im Stall und die Lebens- und Gesundheitsbedingungen für die Tiere darin verbessert.

Bei einer weiteren vorteilhaften Ausführungsform weisen die Liegemuldenplatten an den Seiten, an denen sie mit Laufgangplatten zusammen stoßen, eine gegenüber der Flächennormalen zu der im Wesentlichen planen Fläche eine Neigung auf. So können vorteilhaft erst alle Laufgangplatten verlegt werden, und dann erst die Liegemuldenplatten. Damit können diese Arbeitsschritte und die dafür nötigen Arbeitsgeräte getrennt werden. Zuerst können die in der Regel etwas leichteren Laufgangplatten verlegt werden und dann die in der Regel etwas schwereren Liegemuldenplatten. Vorteilhaft drängen die später verlegten Liegemuldenplatten die vorherverlegten Laufgangplatten so noch enger zusammen.

Die Erfindung stellt erfindungsgemäß einen Stall bereit, der mindestens eine der oben beschriebenen Betonplatten oder einen oben beschriebenen Stallboden umfasst. Ein solcher Stall hat gegenüber den bisher bekannten Ställen den großen Vorteil, dass die Verletzungen der Tiere an dem Stallboden verringert werden, und der Ertrag in der Fleisch- und Milchproduktion gesteigert werden kann.

Außerdem wird durch eine bevorzugte Ausführungsform der Erfindung ein vorteilhafter Stall bereitgestellt, der nicht nur leichter und schneller zu bauen ist, sondern auch noch einen vorteilhaft dichten Stallboden aufweist. Bei dieser bevorzugten Ausführungsform wird auch ein Verfahren zur Herstellung eines solchen Stalls bereitgestellt, wobei das Verfahren die folgenden Schritte umfasst:
(A) ein Bereitstellen einer im Wesentlichen planen Fläche, vorzugsweise aus Schotter oder Kies,
(B) ein Verlegen von Betonplatten, die einen Laufgang bilden (Laufgangplatten) und Liegemuldenplatten aus Beton auf der im Wesentlichen planen Fläche,
(C) ein Verbinden der Liegemuldenplatten mit den Laufgangplatten mit denen sie zusammen stoßen zur Ausbildung eines Stallbodens,
(D) gegebenenfalls ein Verbinden von Laufgangplatten mit einem Futtertisch und
(E) gegebenenfalls ein Verbinden von zusammen stoßenden, nebeneinander verlegten Reihen von jeweils zusammen stoßenden, hintereinander verlegten Laufgangplatten, die einen Laufgang bilden.

Mit diesem Verfahren kann auf schnelle und einfache Weise ein vorteilhafter Stall mit einem vorteilhaft dichtem Stallboden geschaffen werden, da für die Laufgangplatten und Liegemuldenplatten nur eine gemeinsame im Wesentlichen plane Fläche geschaffen werden muss, und Arbeitsschritte für die Schaffung von ein oder mehr Auflageflächen von tiefer als die Liegemuldenplatten zu verlegenden Laufgangplatten entfallen.

Dadurch ist es möglich einen Stallboden und Stall schneller herzustellen, der auch gegenüber Flüssigkeiten dicht ist, wenn er mit einem Fahrzeug befahren wird, und der verhindert, dass bei einem Befahren des Stallbodens mit einem Fahrzeug wegen Undichtigkeiten eine Flüssigkeit, insbesondere Harn und Fäkalien, in den Unterboden unter dem Stallboden sickert. Bevorzugt ist der Stallboden so dicht ausgebildet, dass ihn ein Fahrzeug mit bis zu 8 t pro Achse befahren kann, wobei eine Flüssigkeit im Wesentlichen nicht durch den Stallboden in den Unterboden sickert.

Im Folgenden wird die Erfindung anhand von Zeichnungen näher erläutert. Es zeigt
- Figur 1: eine schematische Draufsicht auf eine erfindungsgemäße Betonplatte mit einer Projektion einer Klaue eines Rinds;
- Figur 2: einen Querschnitt durch die Betonplatte der Figur 1 gemäß der Linie II-II;
- Figur 3: einen Querschnitt durch die Betonplatte der Figur 1 gemäß der Linie III-III;
- Figur 4: die Betonplatte gemäß Figur 1 in einer Perspektivansicht;
- Figur 5: eine schematische Draufsicht eines Stalls mit den erfindungsgemäßen Betonplatten;
- Figur 6: einen Querschnitt durch den Stall der Figur 5 gemäß der Liniell-II;
- Figur 7: einen Ausschnitt einer weiteren Ausführungsform eines erfindungsgemäßen Stalls, der erfindungsgemäße Betonplatten, die einen Teil eines Laufgangs bilden und eine bevorzugte Liegemuldenplatte umfasst, in einer Perspektivansicht;
- Figur 8: eine Detailansicht des Querschnitts von Figur 7;
- Figur 9: eine Detailansicht des Querschnitts von Figur 8;
- Figur 10: eine Detailansicht des Querschnitts von Figur 8;
- Figur 11: eine Detailansicht von Figur 7;
- Figur 12: einen Querschnitt der Detailansicht von Figur 11;
- Figur 13: einen Querschnitt durch einen Laufgang von in einer Reihe hintereinander verlegten erfindungsgemäßen Betonplatten;
- Figur 14: einen Ausschnitt einer bevorzugten Ausführungsform eines erfindungsgemäßen Stallbodens mit Laufgangplatten und teilweise dargestellten Liegemuldenplatten in einer Perspektivansicht;
- Figur 15: eine Detailansicht der Laufgangplatten der Perspektivansicht von Figur 14;
- Figur 16: eine Draufsicht der Detailansicht von Figur 15 als Querschnitt durch zwei Laufgangplatten von nebeneinander verlegten, zusammen stoßenden Reihen von hintereinanderverlegten, zusammen stoßenden Laufgangplatten;
- Figur 17: einen Querschnitt durch einen Laufgang von in einer Reihe hintereinander verlegten, zusammen stoßenden Laufgangplatten;
- Figur 18: einen Querschnitt durch einen Laufgang von in einer Reihe hintereinander verlegten Laufgangplatten einer weiteren Ausführungsform;
- Figur 19: eine Detailansicht einer weiteren Ausführungsform eines Querschnitts von einer Liegemuldenplatte, die an eine Laufgangplatte stößt.

In den verschiedenen Figuren sind entsprechende Bauteile, Elemente und Gegenstände mit gleichen Bezugszeichen versehen.

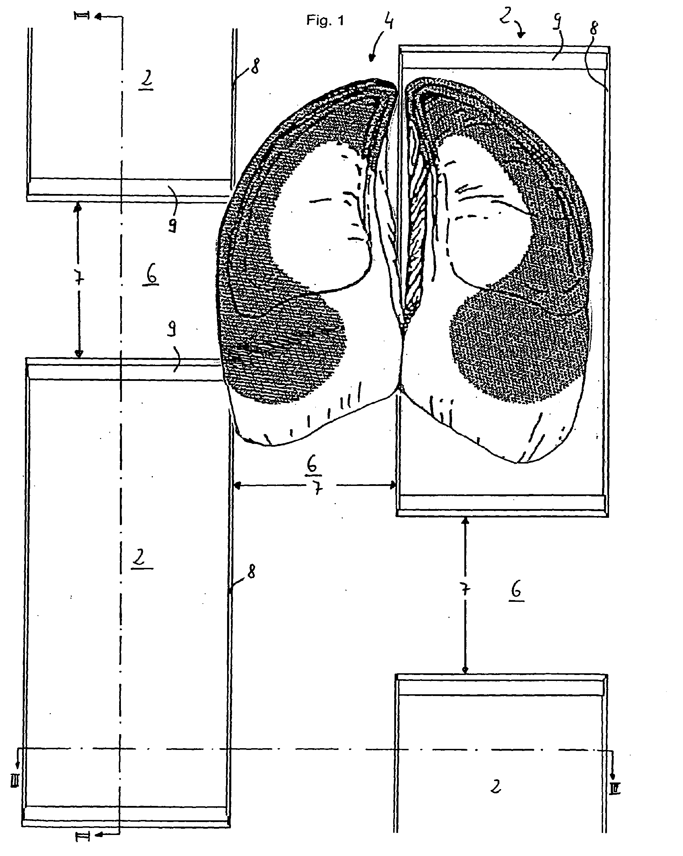

Die Figur 1 zeigt eine schematische Draufsicht auf eine erfindungsgemäße Betonplatte mit einer Projektion der Klauen eines Fußes 4 eines Rinds. Die Betonplatte ist insbesondere an die Nutzung für einen Stall mit Rindern angepasst. Ihre Oberfläche weist die Vertiefungen 2 auf. Die Vertiefungen haben eine Breite, die im Wesentlichen einer halben Fußbreite, d.h. im Wesentlichen einer Klauenbreite, der gezeigten Projektion der Klauen des Fußes 4 in Laufrichtung des Rinds entspricht. Die Vertiefungen sind versetzt zueinander angeordnet. Ferner weisen die Vertiefungen 2 auf der Betonplatte solche Abstände voneinander auf, dass ein Rind im Wesentlichen bei jedem Schritt mit einer Klaue in eine Vertiefung treten kann. In der Ausführungsform der Betonplatte von Fig. 1 ist dies dadurch gewährleistet, dass die Vertiefungen durch die Stege 6 voneinander getrennt sind, die vorzugsweise die gleiche oder nur unwesentlich verschiedene, besonders bevorzugt eine nur unwesentlich geringere, Breite aufweisen als die Vertiefungen 6. Mit Breite der Stege 6 ist der geringste Abstand zwischen zwei Vertiefungen 2 gemeint, wie durch die Pfeile 7 veranschaulicht. Die Abstände der Vertiefungen und damit die Breite 7 der Stege 6 hängt, wie die Breite der Vertiefungen 2 selbst, davon ab, für welche Tiere der Stallboden verwendet werden soll. In der Regel ist eine Breite 7 der Stege 6 von etwa 3 bis 9 cm, vorzugsweise 5 bis 7 cm, für die verschiedensten Rinder in verschiedenen Altersstufen geeignet. Die Vertiefungen 2 weisen eine Länge in den in dem Stall durch die Verlegung der Betonplatten vorgegebenen bevorzugten Laufrichtungen der Rinder auf, die vorteilhaft größer ist als die Klauenlänge der Rinder in diesen Laufrichtungen. Sie beträgt in der Fig. 1 etwa die 1,5-fache Länge der durch Schraffur gezeigten Auftrittsfläche 5 der Klaue in Laufrichtung. Dadurch kann der halbe Fuß oder die Klaue eines Rinds gut Platz finden in der Vertiefung 2. Die Länge der Vertiefungen sollte in den in dem Stall durch die Verlegung der Betonplatten vorgegebenen bevorzugten Laufrichtungen der Rinder jedoch in der Regel nicht viel länger sein als etwa die 2,5-fache Länge der durch Schraffur gezeigten Auftrittsfläche 5 der Klaue in Laufrichtung, damit ein ausreichend großes Verhältnis von Vertiefungen 2 und Stegen 6 auf der Betonplatte bestehen bleibt, um ein seitliches Wegrutschen der Tiere in Laufrichtung im Wesentlichen zu vermeiden. Das Verhältnis der mit Vertiefungen 2 versehenen Fläche zur Gesamtfläche der Betonplatte ist bei einer bevorzugten Ausführungsform der Erfindung etwa 1: 2, wenn die Gesamtfläche der Betonplatte die Fläche einschließt, die mit Vertiefungen versehen ist. Das heißt die Fläche der Betonplatte, die Vertiefungen aufweist, verhält sich bei dieser bevorzugten Ausführungsform zu der Fläche der Betonplatte, die durch die zwischen den Vertiefungen verbleibenden Stege 6 beschrieben wird, etwa 1:1.

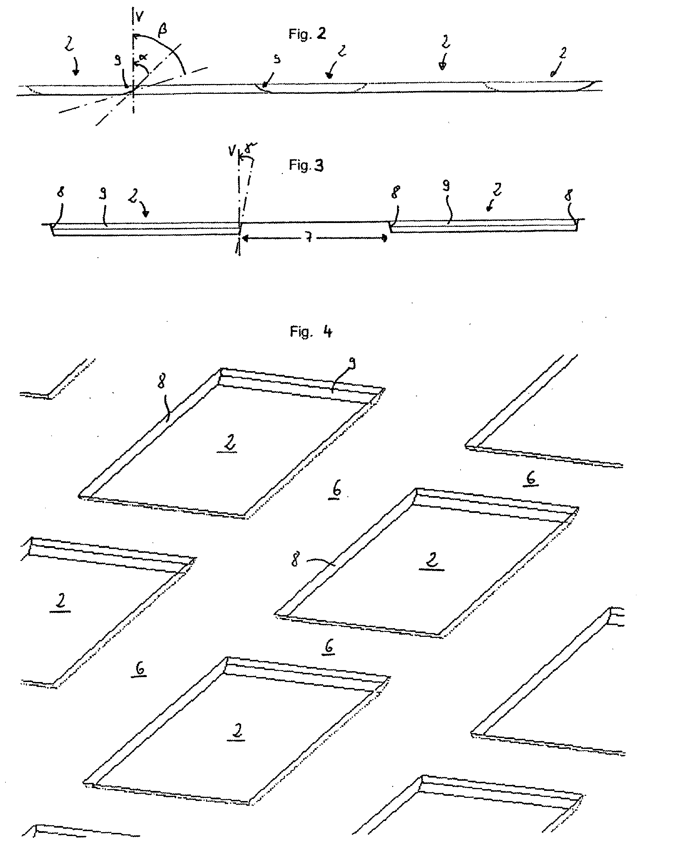

Wie in den Fig. 2 und 3 gezeigt besitzen die Vertiefungen 2 abgeschrägte Seitenwände 8 und 9. Die Figur 2 zeigt einen Querschnitt durch die Betonplatte der Figur 1 gemäß der Linie II-II. Die Figur 3 zeigt einen Querschnitt durch die Betonplatte der Figur 1 gemäß der Linie III-III. Die Längsseitenwände 8 sind einfach abgeschrägt und weisen gegenüber der Vertikalen V eine Neigung γ von etwa 20° auf. Die Seitenwände in der Breitenerstreckung sind zweifach abgeschrägt und weisen gegenüber der Vertikalen V eine erste Neigung α von etwa 24° und eine zweite Neigung β von etwa 72° auf.

Die Fig. 4 zeigt die in den Fig. 1 bis 3 veranschaulichte Betonplatte mit den Vertiefungen 2, abgeschrägten Seitenwänden 8 und 9 und den zwischen den Vertiefungen bestehen bleibenden Stegen 6 in einer Perspektivansicht.

Die in den Fig. 1 bis 4 gezeigten Vertiefungen 2 sind auch in den Fig. 5, 7, 9, 10, 11, 12, 14, 15 und 16 gezeigt.

Die Figur 5 zeigt eine schematische Draufsicht auf einen Stallboden eines erfindungsgemäßen Stalls aus einem bevorzugten Betonfertigteilesystem. Der gezeigte Stallboden weist zwei Laufgänge 30 und 40 auf. Der Laufgang 30 besteht aus einer ersten 31 und einer zweiten Reihe 32 von hintereinander verlegten, zusammen stoßenden Laufgangplatten 131 bzw. 132. Die Reihe 31 besteht aus zusammen stoßenden, hintereinander verlegten Laufgangplatten 131. Sie stößt mit der Reihe 32 aus zusammen stoßenden, hintereinander verlegten Laufgangplatten 132 zusammen. Die zwei zusammen stoßenden Reihen 31 und 32 sind nebeneinander verlegt und bilden den Laufgang 30 zwischen zwei Reihen von hintereinander verlegten Liegemuldenplatten 21 bzw. 22. An den Seiten, an denen die Laufgangplatten und 131 und 132 der Reihen 31 und 32 zusammen stoßen, bilden sie den Kanal 70 zur Aufnahme eines Seils einer Stallentmistungsanlage. Die Laufgangplatten 131 sind mit der Reihe aus hintereinander verlegten Liegemuldenplatten 21 verbunden. Die Liegemuldenplatten sind als Doppelbox mit den zwei Liegemulden 121 und 122 ausgeführt. Die Laufgangplatten 131 sind versetzt zu den Liegemuldenplatten 21 angeordnet. Die Laufgangplatten 131 sind dabei jeweils so angeordnet, dass sie mit zwei verschiedenen Liegemuldenplatten 21 verbunden sind. Dadurch wird die Dichtigkeit des Laufgangs an den Stößen zwischen den hintereinander verlegten Laufgangplatten 131 erhöht. Da die Laufgangplatten und Liegemuldenplatten bevorzugt die gleiche Länge aufweisen, stoßen die hintereinander verlegten Laufgangplatten 131 in der Mitte einer Liegemuldenplatte 21 zusammen, wo auf der Liegemuldenplatte 21 der Trennbügel 60 angeordnet ist. Der Trennbügel 60 dient dazu, die Liegemulden 121 und 122 einer Liegemuldenplatte 21 voneinander zu trennen, so dass Tiere ungestört von dem Nachbartier in den Liegemulden liegen können. Zwischen den Liegemuldenplatten 21 sind weitere Trennbügel 61 vorgesehen, um die Liegemulden 121 und 122 von benachbarten Liegemuldenplatten 21 abzutrennen. Die Trennbügel 61 sind mit der Platte 62 jeweils auf zwei Liegemuldenplatten verschraubt. Durch diese Verbindung, wird die Dichtigkeit des Laufgangs und der Zusammenhalt des gesamten Stallbodens noch weiter verbessert. Die Laufgangplatten 132 sind ebenfalls versetzt zu den Liegemuldenplatten 22 angeordnet. Das heißt, die Laufgangplatten 132 sind so angeordnet, dass sie mit zwei verschiedenen Liegemuldenplatten 22 verbunden sind. Dadurch wird die Dichtigkeit des Laufgangs an den Stößen zwischen den hintereinander verlegten Laufgangplatten 132 erhöht. Da die Laufgangplatten und Liegemuldenplatten bevorzugt die gleiche Länge aufweisen, stoßen die hintereinander verlegten Laufgangplatten 132 in der Mitte einer Liegemuldenplatte 22 zusammen, wo auf der Liegemuldenplatte 22 der Trennbügel 60 angeordnet ist. Der Trennbügel 60' dient dazu, die Liegemulden 121' und 122' einer Liegemuldenplatte 22 voneinander zu trennen, so dass Tiere ungestört von dem Nachbartier in den Liegemulden liegen können. Zwischen den Liegemuldenplatten 22 sind weitere Trennbügel 61' vorgesehen, um die Liegemulden 121' und 122' von benachbarten Liegemuldenplatten 22 abzutrennen. Die Trennbügel 61' sind mit der Platte 62' jeweils auf zwei Liegemuldenplatten 22 verschraubt. Durch diese Verbindung, wird die Dichtigkeit des Laufgangs 30 und der Zusammenhalt des gesamten Stallbodens noch weiter verbessert.

Der Laufgang 40 besteht aus einer ersten 41 und einer zweiten Reihe 42 von hintereinander verlegten, zusammen stoßenden Laufgangplatten 141 bzw. 142. Die Reihe 41 aus zusammen stoßenden, hintereinander verlegten Laufgangplatten 141 stößt mit der Reihe 42 aus zusammen stoßenden, hintereinander verlegten Laufgangplatten 142 zusammen. Die zwei Reihen 41 und 42 sind nebeneinander verlegt und bilden den Laufgang 40 zwischen einer Reihe von hintereinander verlegten, zusammen stoßenden Liegemuldenplatten 43 und dem nur teilweise gezeigten Futtertisch 50. Die Laufgangplatten 141 sind mit der Reihe aus hintereinander verlegten Liegemuldenplatten 43 verbunden. Die Liegemuldenplatten 43 sind als Doppelbox mit den zwei Liegemulden 45 und 46 ausgeführt. Die Laufgangplatten 141 sind versetzt zu den Liegemuldenplatten 43 angeordnet. Die Laufgangplatten 141 sind dabei jeweils so angeordnet, dass sie mit zwei verschiedenen Liegemuldenplatten 43 verbunden sind. Dadurch wird die Dichtigkeit des Laufgangs an den Stößen zwischen den hintereinander verlegten Laufgangplatten 141 erhöht. Da die Laufgangplatten und Liegemuldenplatten bevorzugt die gleiche Länge aufweisen, stoßen die hintereinander verlegten Laufgangplatten 141 in der Mitte einer Liegemuldenplatte 43 zusammen, wo auf der Liegemuldenplatte 43 der Trennbügel 60" angeordnet ist. Der Trennbügel 60" dient dazu, die Liegemulden 44 und 45 einer Liegemuldenplatte 43 voneinander zu trennen, so dass Tiere ungestört von dem Nachbartier in den Liegemulden liegen können. Zwischen den Liegemuldenplatten 43 sind weitere Trennbügel 61" vorgesehen, um die Liegemulden 44 und 45 von benachbarten Liegemuldenplatten 43 abzutrennen. Die Trennbügel 61" sind mit der Platte 62" jeweils auf zwei benachbarten Liegemuldenplatten 43 verschraubt. Durch diese Verbindung, wird die Dichtigkeit des Laufgangs 40 und der Zusammenhalt des gesamten Stallbodens noch weiter verbessert. Die Laufgangplatten 142 sind mit dem Futtertisch 50 verbunden. An den Seiten, an denen die Laufgangplatten 141 und 142 der Reihen 41 und 42 zusammen stoßen, bilden sie den Kanal 71 zur Aufnahme eines Seils einer Stallentmistungsanlage. Die Stallentmistungsanlage umfasst den Mistschieber 80 mit den Schieberarmen 81 und 82. Der Mistschieber wird kann in dem Laufgang 40 durch ein Seil hin- und herbewegt werden. Das Seil kann nach dem Betrieb des Mistschiebers von dem Kanal 71 aufgenommen werden und stellt kein Hindernis dar, da es vollständig in dem Kanal 71, vorzugsweise auf Auflageklötzen, abgelegt werden kann.

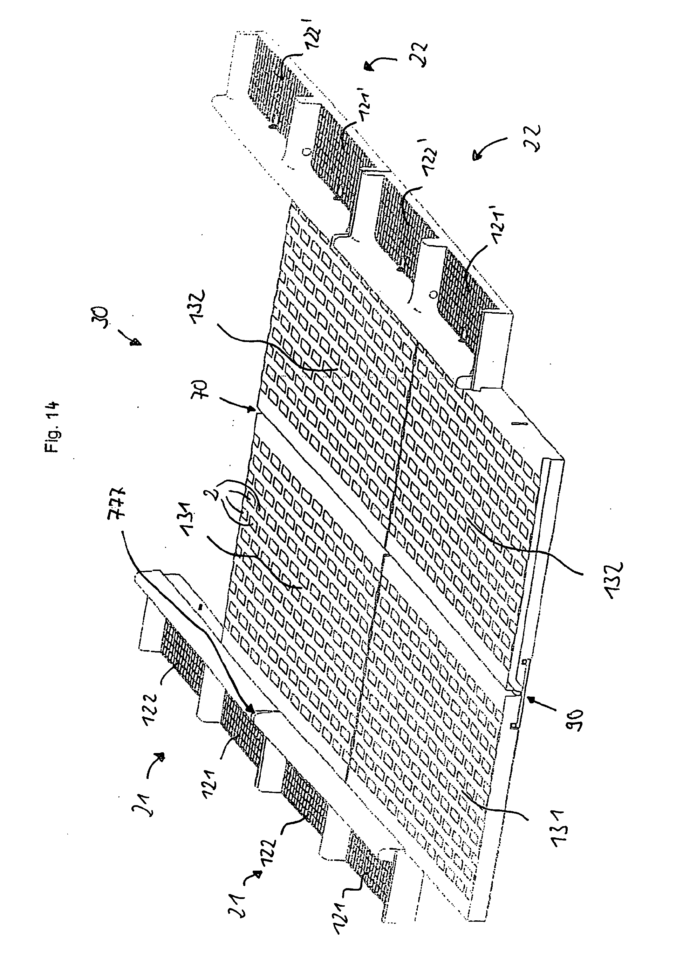

Die Figur 6 zeigt einen Querschnitt durch den Stall der Figur 5 gemäß der Linie II-II. Die Liegemuldenplatten 21, 22, 43 und Laufgangplatten 131, 132, 141 und 143 sind auf einer gemeinsamen im Wesentlichen planen Fläche des Unterbodens 10 verlegt. Da die Liegemuldenplatten nicht auf den Laufgangplatten aufliegen, werden die Laufgangplatten nicht einseitig belastet. Dadurch werden die zusammen stoßenden Laufgangplatten 131 und 132 bzw. 141 und 142 nicht in der Mitte der Laufgänge 30 bzw. 40, an denen die Laufplatten zusammen stoßen angehoben. Damit wird konstruktiv ein Problem für eine Undichtigkeit von Laufgängen vermieden. Besonders bevorzugt werden die Laufgangplatten 131 und 132 bzw. 141 und 142 miteinander verbunden, wie z.B. in den Fig. 14 bis 17 gezeigt. Um die Dichtigkeit zwischen Laufgangplatten und Liegemuldenplatten zu gewährleisten, sind die Laufgangplatten 131 mit den Liegemuldenplatten 21, die Laufgangplatten 132 mit den Liegemuldenplatten 22, die Laufgangplatten 141 mit den Liegemuldenplatten 43. Die Laufgangplatten 141 sind mit dem Futtertisch 50 verbunden. Zwischen dem Unterboden 10 und den Liegemuldenplatten 21, 22 und 43 sowie den Laufgangplatten 131, 132, 141 und 143 ist vorzugsweise eine Schotter- oder Kiesschicht vorgesehen, die als Frostschutzschicht 4 bis 10 cm, besonders bevorzugt 5 bis 7 cm, dick sein kann. Durch die Erfindung kann der weitgehend größte Teil der Grundfläche eines Stalls einfach bereitgestellt werden. Bei einer besonders bevorzugten Ausführungsform der Erfindung wird der Futtertisch ebenfalls aus Fertigbetonteilen aufgebaut. Diese Fertigbetonteile werden dann besonders bevorzugt ebenfalls auf der gleichen im Wesentlichen planen Fläche wie die Laufgangplatten und Liegemuldenplatten verlegt. Dann kann die gesamte Grundfläche eines Stalls und damit der Stall besonders leicht und schnell bereitgestellt werden. Um eine besonders hohe Stabilität und Dichtigkeit des Laufgangs zu erreichen, ist es bevorzugt, dass die Laufgangplatten 131 und 132 bzw. 141 und 142, gleich groß sind, damit bei einem Befahren des Laufgangs mit einem Fahrzeug, zum Beispiel einem Einstreuwagen oder auch mit einem Reinigungswagen oder Futtermischwagen, die Platten gleichmäßig belastet werden. Eine solche Stabilität ist hinsichtlich der Dichtigkeit des gebildeten Laufgangs wichtig. Bevorzugt weisen Laufgangplatten 131 und 132 bzw. 141 und 142 an den Seiten, an denen sie nach einem Verlegen zusammen stoßen und den Kanal 70 bzw. 71 bilden, eine Länge von mindestens 1,50 m auf, besonders bevorzugt eine Länge von mindestens 2 m und ganz besonders bevorzugt eine Länge von etwa 2,50. Sie können aber auch noch länger sein. Sie sollten jedoch nicht viel länger als 4 m sein, da sonst die Verlegung der Betonplatten zu aufwändig wird. Mit Länge ist die räumliche Ausdehnung der Platten in Richtung des Kanals gemeint. Die Breite der erfindungsgemäßen Platten, aus der sich also in der Figur 5 oder 6 der Abstand zwischen den zwei Reihen von Liegemuldenplatten 21 und 22 bzw. der Abstand zwischen der Reihe von Liegemulden 43 und dem Futtertisch 50 ergibt, kann ebenfalls verschieden groß gestaltet werden, jeweils nach den Bedürfnissen, die für einen bestimmten Stall gewünscht werden. Die Breite einer Platte beträgt für eine schnelle Verlegung und für eine ausreichende Stabilität des Laufgangs insbesondere hinsichtlich einer Befahrbarkeit mit einem Fahrzeug jedoch vorzugsweise mindestens 50 cm, besonders bevorzugt mindestens 1 m, z.B. 1,30 m, ganz besonders bevorzugt mindestens 1,50 m, insbesondere 1,55 m, 1,80 m, 2,05 m, 2,30 m und 2,55 m. Die Platten können aber auch noch breiter sein, sollten jedoch nicht breiter als 4 m sein wie oben beschrieben. Besonders bevorzugt werden zwei Reihen solcher hintereinander, verlegbarer Platten nebeneinander verlegt, so dass sich Laufgänge miteiner Breite von mindestens 1 m, vorzugsweise mindestens 3 m, und bis zu 8 m Breite, besonders bevorzugt 2,60 m bis 5,10 m ergeben.

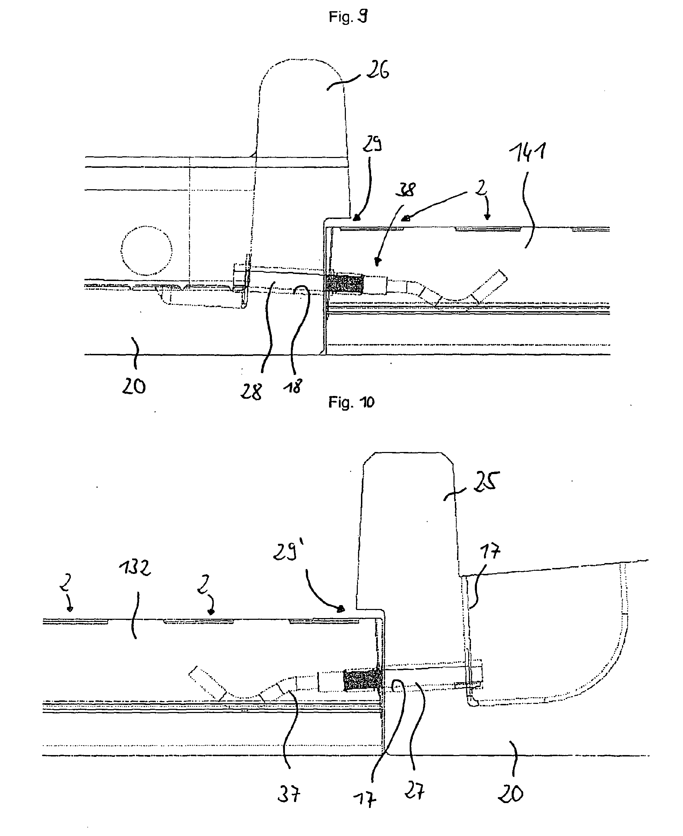

Die Figur 7 zeigt einen Ausschnitt einer weiteren Ausführungsform eines erfindungsgemäßen Stalls, der erfindungsgemäße Laufgangplatten 131 und 132 eines Laufgangs und die Laufgangplatten 141 und 142 eines weiteren Laufgangs und eine bevorzugte Liegemuldenplatte 20 umfasst, in einer Perspektivansicht. Die Liegemuldenplatte 20 ist mit den Laufgangplatten 132 und 141 von zwei verschiedenen Laufgängen verbindbar. Sie weist daher an beiden Seiten, an denen sie mit einer Laufgangplatte zusammenstößt, einen über die Laufgangplatten hinausragenden Rand auf. Diese Ränder sind in Fig. 8 gezeigt (25 und 26). Die in den Figuren 5 und 6 gezeigten Liegemuldenplatten benötigen jeweils nur einen solchen Rand, da sie nur an einer Seite mit Laufgangplatten zusammen stoßen. Diese Ränder bilden die Seitenwände der Laufgänge und dienen als Anschlag für die Enden der Schieberarme eines Mistschiebers, der in einer bevorzugten Ausführungsform eines Stalls der Erfindung in einem Laufgang zum Räumen von Kot und Harn umfassenden Flüssigkeiten hin- und herbewegt wird.

Die Figur 8 zeigt eine Detailansicht eines Querschnitts von Figur 7. Die Liegemuldenplatte 20 ist mit den Laufgangplatten 132 und 141 von zwei verschiedenen Laufgängen verbunden. Sie weist an der Seite, an der sie mit der Laufgangplatte 132 zusammenstößt, den über die Laufgangplatte 132 hinausragenden Rand 25 auf. An der Seite, an der sie mit der Laufgangplatte 141 zusammenstößt, besitzt sie den über die Laufgangplatte 141 hinausragenden Rand 26. Diese Ränder der Liegemuldenplatte bilden die Seitenwände der Laufgänge und können als Anschlag für die Enden der Schieberarme eines Mistschiebers dienen. Die Verbindung der Liegemuldenplatte 20 mit den Laufgangplatten 132 bzw. 141 erfolgt über die Schrauben 27 und 28, die durch in die Liegemuldenplatte 20 hineinreichende Durchgänge (siehe Fig. 9 und 10: 17 und 18) verschraubt sind. Die Seiten der Laufgangplatte 20, mit denen sie gegen die Laufgangplatte 132 bzw. 141 stößt ist etwas gegen die Normale zu der Fläche, auf der die Platten verlegt werden, etwas geneigt. Dadurch können vorteilhaft erst die Laufgangplatten verlegt werden und erst dann die Liegemuldenplatten 20.

Die Figur 9 zeigt eine Detailansicht des Querschnitts von Figur 8 in dem Bereich, in dem die Liegemuldenplatte 20 mit der Laufgangplatte 141 zusammenstößt und verbunden ist. Die Liegemuldenplatte 20 ist mit der Laufgangplatte 141 über die Schraube 28 verbunden. Die Schraube 28 kann bequem nach einem Verlegen der Liegemuldenplatten und Laufgangplatten eines Stalls durch den in die Liegemulde 11 hineinreichenden Durchgang 18 in die Verankerungshülse 38 geschraubt werden, die in der Laufgangplatte 141 vorgesehen ist. Anstelle der Schraube kann auch ein Verbindungsbolzen oder anderes Befestigungsmittel vorgesehen sein. Nach dem Verbinden kann der Durchgang 18 mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 141 ragende Rand 26 der Liegemuldenplatte 20 kann für eine verbesserte Abdichtung zwischen Liegemuldenplatte und Laufgang etwas über die Laufgangplatte hinausgezogen sein für eine gewisse Überlappung. Besonders bevorzugt stoßen die Laufgangplatte und Liegemuldenplatte formschlüssig und besonders bevorzugt überlappend zusammen. Der Spalt 29 zwischen der Liegemuldenplatte und Laufgangplatte kann, nach einem Verbinden der Laufgangplatte 141 mit der Liegemuldenplatte 20 mit der Schraube 28, mit einer Vergussmasse vergossen und damit noch besser abgedichtet werden.

Die Figur 10 zeigt eine Detailansicht des Querschnitts von Figur 8 in dem Bereich, in dem die Liegemuldenplatte 20 mit der Laufgangplatte 132 zusammenstößt und verbunden ist. Die Liegemuldenplatte 20 ist mit der Laufgangplatte 132 über die Schraube 27 verbunden. Die Schraube 27 kann bequem nach einem Verlegen der Liegemuldenplatten und Laufgangplatten eines Stalls durch den in die Liegemuldenplatte 20 hineinreichenden Durchgang 17 in die Verankerungshülse 37 geschraubt werden, die in der Laufgangplatte 132 vorgesehen ist. Der Durchgang 17 ist zur Oberseite der Liegemuldenplatte 20 hin in geeigneter Weise zugänglich ausgestaltet, sodass die Schraube 27 nach einem Verlegen der Liegemuldenplatte 20 und der Laufgangplatte 132 eingesetzt und angezogen werden kann. Anstelle der Schraube kann auch ein Verbindungsbolzen oder anderes Befestigungsmittel vorgesehen sein. Nach dem Verbinden kann der Durchgang 17, der sich bis zur Oberseite der Liegemuldenplatte 20 erstreckt mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 132 ragende Rand 25 der Liegemuldenplatte 20 kann für eine verbesserte Abdichtung zwischen Liegemuldenplatte und Laufgang etwas über die Laufgangplatte gemuldenplatte und Laufgang etwas über die Laufgangplatte hinausgezogen sein für eine gewisse Überlappung. Besonders bevorzugt stoßen die Laufgangplatte und Liegemuldenplatte formschlüssig und besonders bevorzugt überlappend zusammen. Der Spalt 29' zwischen der Liegemuldenplatte und Laufgangplatte kann, nach einem Verbinden der Laufgangplatte 132 mit der Liegemuldenplatte 20 mit der Schraube 27, mit einer Vergussmasse vergossen und damit noch besser abgedichtet werden.

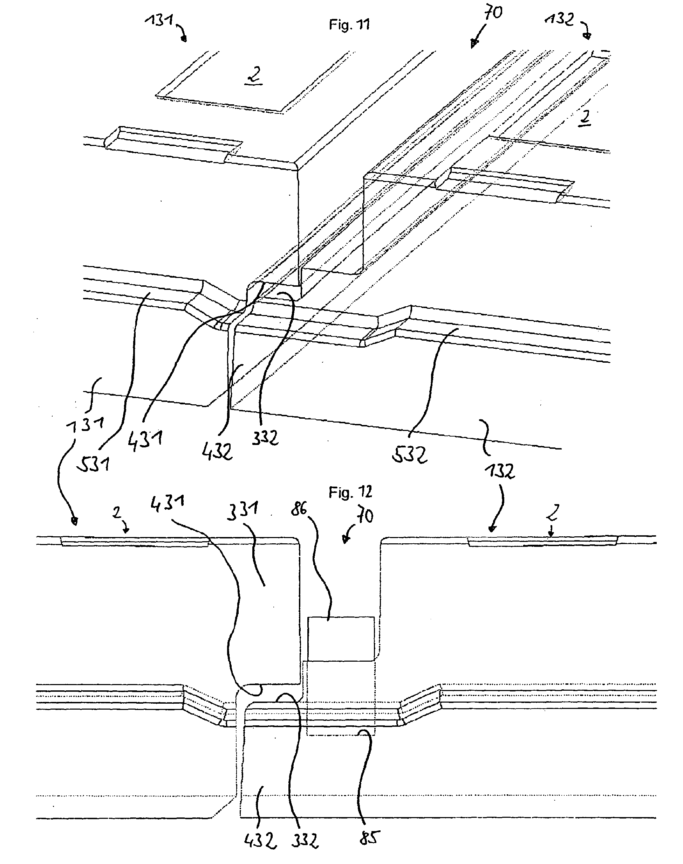

Die Figur 11 zeigt eine Detailansicht von Figur 7 in dem Bereich, in dem die Laufgangplatten 131 und 132 von zwei hintereinander verlegten, zusammen stoßenden Reihen 31 und 32 (siehe Fig. 5) zusammen stoßen, in einer Perspektivansicht. Die Laufgangplatten 131 und 132 weisen dabei an dem gemeinsamen Stoß ineinander greifende und teilweise überlappende Ausnehmungen und Vorsprünge auf. Die Laufgangplatte 131 weist den Vorsprung 331 auf, der von der Ausnehmung 332 der Laufgangplatte 132 aufgenommen wird. Die Laufgangplatte 132 weist den Vorsprung 432 auf, der von der Ausnehmung 431 der Laufgangplatte 131 aufgenommen wird. Die Ausnehmung 332 ist so groß ausgestaltet, dass sie mit dem nicht vollständig in sie hinein ragenden Vorsprung 331 zusammen den Kanal 70 bildet. Die Vorsprünge 331 und 432 bzw. Ausnehmungen 332 und 431 können so aufeinander angepasst sein, dass sie ohne Quellband dicht sind. Bei einer alternativen Ausführungsform ist ein zusätzliches Quellband zur verbesserten Abdichtung vorgesehen.

Die Figur 12 zeigt die Detailansicht von Figur 11 als Querschnitt wobei die gleichen Bezugszeichen die gleichen Bauteile veranschaulichen. Gemäß einer besonders bevorzugten Ausführungsform der Erfindung weist die Laufgangplatte 132 die Ausnehmung 85 auf. Darin ist der Auflageklotz 86 eingesetzt. Auf diesem kann ein Seil einer Stallentmistungsanlage aufliegen. Die Größe des Kanals 70 ist so gestaltet, dass der Kanal ein Seil einer üblichen Stallentmistungsanlage, mit der ein Mistschieber der Stallentmistungsanlage auf dem Laufgang hin und her bewegt wird, unter Flur (im Stallboden) verlaufen kann. Durch die Auflageklötze 86 in dem Kanal der bevorzugten Ausführungsform der Erfindung kann vermieden werden, dass durch die Hin- und Herbewegung des Seils der Stallentmistungsanlage Furchen in den Laufgangboden durch Hin- und Herbewegung des Seils gekratzt werden, wodurch der Stallboden in seiner Struktur geschwächt und für Flüssigkeiten durchlässig werden kann. Die Klötze 86 können aus einem sehr abriebsfesten Material sein mit geringem Widerstand. Besonders bevorzugt sind sie aber aus einem Material, das auch das Seil nicht beschädigt, preiswert ist und das nach einiger Zeit ausgewechselt wird, wenn das Seil der Stallentmistungsanlage den Klotz durch die Hin- und Herbewegung verschlissen hat.

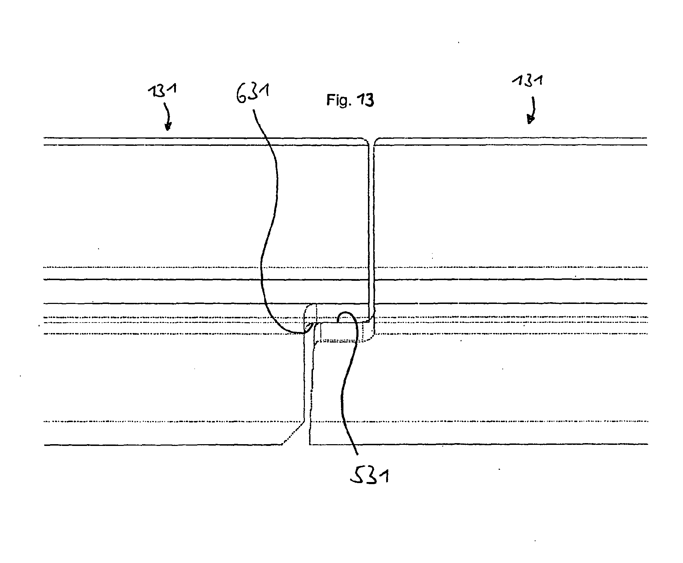

Die Figur 13 zeigt einen Schnitt durch den Laufgang der Fig. 11 und 12 durch den Kanal 70, wobei die gleichen Bezugszeichen die gleichen Bauteile veranschaulichen. Dabei ist eine weitere Laufgangplatte 131 gezeigt. Die hintereinander verlegten Laufgangplatten 131 und 131 weisen dabei an dem gemeinsamen Stoß ineinander greifende und teilweise überlappende Ausnehmungen und Vorsprünge auf. Die Laufgangplatte 131 weist den Vorsprung 531 auf (siehe auch Fig. 11), der von der Ausnehmung 631 der anderen Laufgangplatte 131 aufgenommen wird. Die Laufgangplatte 132 weist den Vorsprung 532 (siehe Fig. 11) auf, der von einer entsprechenden Ausnehmung einer anstoßenden weiteren Laufgangplatte 132 aufgenommen wird.

Die Ausführungsformen der Laufgangplatten gemäß der Figuren 11 bis 13 können ein Quellband aufweisen.

Die Figur 14 zeigt einen Ausschnitt von einer besonders vorteilhaften und bevorzugten Ausführungsform eines erfindungsgemäßen Stallbodens gemäß Fig. 5 mit Laufgangplatten und teilweise dargestellten Liegemuldenplatten in einer Perspektivansicht, wobei die gleichen Bezugszeichen die gleichen Bauteile veranschaulichen. Die nebeneinander verlegten und zusammen stoßenden Laufgangplatten 131 und 132 der zwei Reihen 31 und 32 von hintereinander verlegten, zusammen stoßenden Laufgangplatten sind jeweils mit einem Verbindungselement 90 verbunden. Durch die Verbindung der Laufgangplatten 131 und 132 der zwei Reihen 31 und 32 kann die Dichtigkeit des Laufgangs 30 zusätzlich verbessert werden.

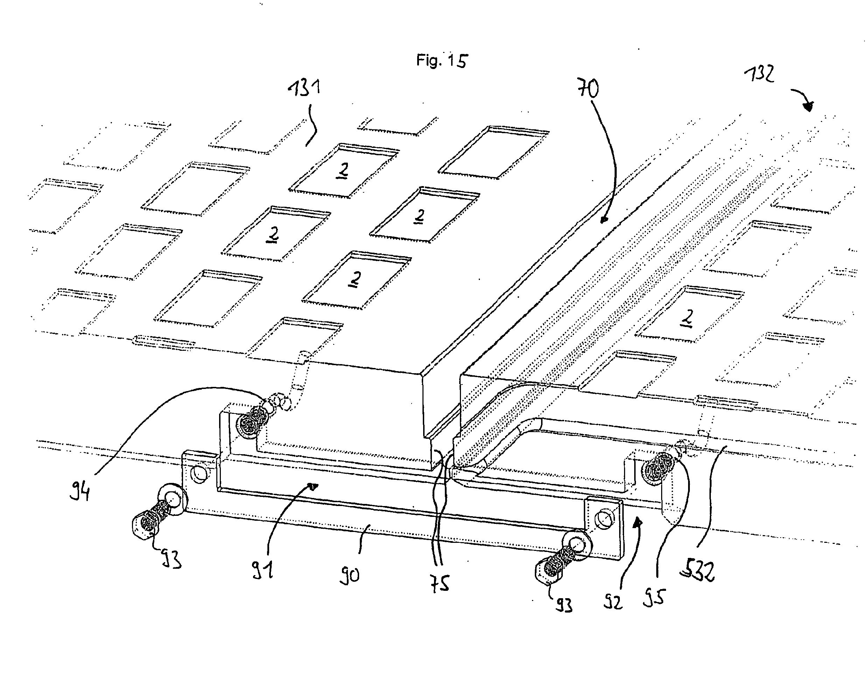

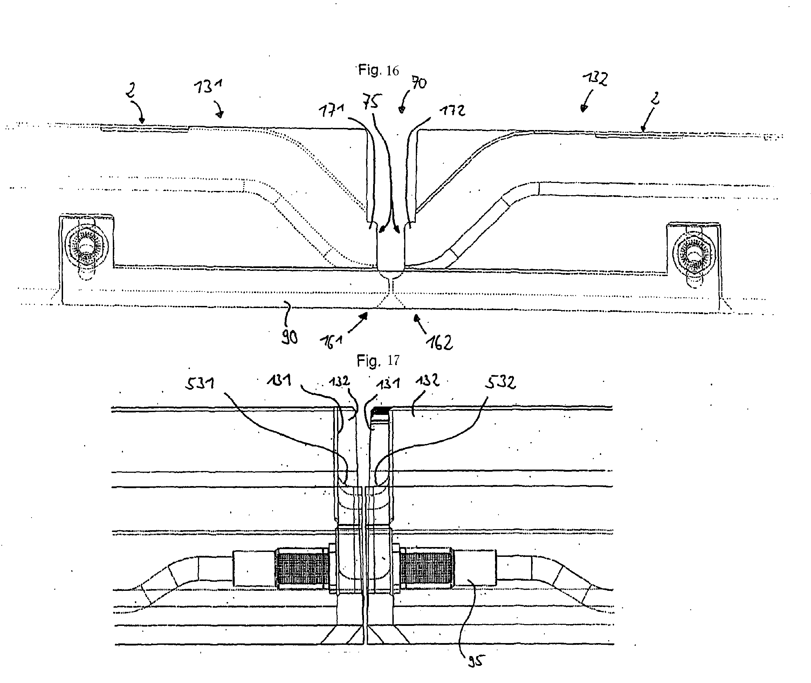

Die Figur 15 zeigt eine Detailansicht der Laufgangplatten 131 und 132 der Perspektivansicht von Figur 14 und ihre Verbindung durch das Verbindungselement 90. Das Verbindungselement 90 ist als Verbindungsanker ausgebildet. Zur Aufnahme des Verbindungsankers 90 weisen die Laufgangplatten 131 bzw. 132 die Ausnehmung 91 bzw. 92 zur Aufnahme des Verbindungselements 90 auf. Besonders bevorzugt, weisen diese Laufgangplatten zwei solcher Ausnehmungen 91 bzw. 92 zur Aufnahme des Verbindungselements auf, jeweils eine Ausnehmung an der Seite an der die Laufgangplatte 131 mit einer weiteren Laufgangplatte 131 bzw. die Laufgangplatte 132 mit einer weiteren Laufgangplatte 132 zusammenstößt auf. Diese zwei Ausnehmungen pro Laufgangplatte sind an den Seiten der Laufgangplatten angeordnet, an denen die Laufgangplatten mit einer Laufgangplatte ihrer Reihe zusammen stoßen. Damit wird die Zugänglichkeit der Ausnehmungen 91 und 92 gewährleistet, selbst wenn die Ausnehmungen an der der im Wesentlichen planen Fläche zugewandten Unterseite angeordnet sind. Dies ist bevorzugt, da somit kein weiteres Dichtigkeitsproblem geschaffen, sondern vermieden wird. Die Laufgangplatten 131 und 132 weisen an den Seiten, an denen sie zusammen stoßen, jeweils einen Vorsprung 161 bzw. 162 auf (siehe Fig. 16). Dadurch bilden sie den zur Laufgangoberfläche hin offenen Kanal 70. Die Vorsprünge 161 und 162 sind so ausgeführt, dass sie einen halbrohrförmig ausgeformten Boden des Kanals bilden. Nach dem Verlegen der Laufgangplatten und dem Verbinden der Laufgangplatten 131 und 132 mit dem Verbindungselement kann der Stoß zwischen den Platten 131 und 132 zusätzlich abgedichtet werden, indem eine Rundschnur (nicht gezeigt) in den halbrohrförmig ausgeformten Boden des Kanals 70 eingebracht wird. Der sich durch die Vorsprünge 171 und 172 der Laufgangplatten 131 bzw. 132 zum Boden des Kanal 70 hin verjüngende, vorzugsweise gestufte, Bereich 75 des Kanals kann nach dem Einbringen der Rundschnur mit einer Vergussmasse unter Ausbildung einer Zweiflankendichtung abgedichtet werden.

Nach dem gleichen Prinzip der Abdichtung mit Rundschnur und Vergussmasse können auch die hintereinander verlegten, zusammen stoßenden Laufgangplatten 131 der Reihe 31 bzw. die hintereinander verlegten, zusammen stoßenden Laufgangplatten 132 der Reihe 32 zusätzlich abgedichtet werden. Dazu weist die Laufgangplatte 132 den Vorsprung 532 auf. Wie in Fig. 16 veranschaulicht, die eine Draufsicht auf den Querschnitt der Laufgangplatten 131 und 132 von Fig. 15 zeigt, weist die Laufgangplatte 131, einen dem Vorsprung 532 entsprechenden Vorsprung 531 auf, der an der "Rückseite" der Laufgangplatte 131 angeordnet ist, wie aus Fig. 17 zu erkennen ist. Auf die Vorsprünge 532 und 532 können für eine bevorzugte Abdichtung Rundschnüre eingelegt werden. Nach dem Einbringen der Rundschnüre kann darauf wieder eine Vergussmasse zur Ausbildung einer Zweiflankendichtung gegossen werden.

Durch Verwendung dieser erfindungsgemäßen Laufgangplatten kann eine einfache und schnelle sowie sichere und dichte Abdichtung eines Laufgangs gewährleistet werden.

Ein solcher Laufgang hält auch einem Befahren der Laufgangplatten 131 und 132 mit einem Fahrzeug stand, ohne die Dichtigkeit zu beeinträchtigen. Besonders bevorzugt sind die Laufgangplatten 131 und 132 gleich groß, d.h. gleich breit, gleich lang, gleich dick, und daher auch gleich schwer.

Bei einer bevorzugten Ausführungsform weisen die miteinander verbindbaren Laufgangplatten 131 und 132 gemäß der Fig. 11 bis 13 bzw. gemäß der Fig. 15 bis 17 ein Gefälle auf, so dass die Dicke der Platten 131 und 132, zu den Seiten hin, an denen sie zusammen stoßen und den Kanal 70 bilden, abnimmt. Damit kann die Flüssigkeit vorteilhaft in den Kanal 70 laufen und bei einer bevorzugten Ausführungsform zum Teil auch über den Kanal 70 abgeleitet werden. Besonders bevorzugt sind die Laufgangplatten 131 und 132 zu dem Kanal 70, den sie zusammen bilden, wenn sie nach dem Verlegen zusammen stoßen, im Wesentlichen spiegelsymmetrisch aufgebaut. Im Wesentlichen spiegelsymmetrisch bedeutet, dass geringe Unterschiede durchaus bestehen können. Das Befestigungselement 90 wird vorzugsweise nur einmal zur Verbindung von zwei Laufgangplatten 131 und 132 verwendet. Ferner können die Ausnehmungen zur Aufnahme der Auflageklötze 86 auch nur in einer der Laufgangplatten 131 und 132 vorgesehen sein, wie in der Fig. 12 nur in der Platte 132. Außerdem ist es nicht notwendig, dass der Kanal 70 selbst einen spiegelsymmetrischen Querschnitt aufweist. Außerdem kann der Kanal auch schon vorgefertigt nur in einer der Laufgangplatten 131 oder 132 vorgesehen sein (nicht gezeigt). Ferner kann bei nur einer der Laufgangplatten 131 und 132 ein Quellband vorgesehen sein. Besonders bevorzugt sind die mindestens erste und zweite Betonplatte 20 und 120 jedoch soweit wie möglich spiegelsymmetrisch zu einer durch die Mitte des Kanals verlaufenden Spiegelebene des Laufgangs. Damit wird auch die Stabilität der Anordnung zum Befahren der Oberfläche erhöht. Außerdem ist die Verwendung eines Kanals 70 zur Führung eines Faltmistschiebers 80 (siehe Fig. 5) einer Stallentmistungsanlage geeignet. Insbesondere kann damit auch das Seil mit dem der Schieber einer Stallentmistungsanlage bewegt wird, unter Flur aufgenommen werden, so dass dieses nicht auf dem Laufgang aufliegen muss und so ein Hindernis darstellt. Die hintereinander verlegten Platten 131 bzw. 132 können ebenfalls untereinander verbunden werden. Dies gilt entsprechend auch für die jeweils hintereinander verlegten, zusammen stoßenden Platten 141 und142 der Reihen 41 und 42 von Fig. 5.

Die in den Fig. 15 bis 17 gezeigten Laufgangplatten 131 und 132 sind gemäß einer bevorzugten Ausführungsform zueinander rotationssymmetrisch. Die Laufgangplatte 132 kann durch eine Rotation von 180° um eine Flächennormale auf der Fläche auf der die Laufgangplatten verlegt sind in die Laufgangplatte 131 überführt werden. Somit können identische Laufgangplatten sowohl als Laufgangplatten 131 als auch als Laufgangplatten 132 verwendet werden. Dies erleichtert die Herstellung der Laufgangplatten, da nur eine Form verwendet werden muss, um die Laufgangplatten herzustellen. Außerdem können die Laufgangplatten leichter gelagert und transportiert werden. Beim Bau des Stalls müssen ferner keine zwei verschieden ausgeformten Laufgangplatten angeordnet und bevorratet werden, sondern es genügt ein einziger Vorrat an Laufgangplatten der gleichen Ausführung, um einen oder besonders bevorzugt sogar alle Laufgänge eines Stalls herzustellen. Die Herstellung des Stalls wird somit weiter vereinfacht und beschleunigt. Es reicht außerdem eine einzige an diese Laufgangplatten angepasste Halterung an einem Kran zur Verlegung der Laufgangplatten aus. Diese Halterung muss nicht für verschiedene Laufgangplatten gewechselt werden.

Durch die feste und sichere Verbindung der Laufgangplatten miteinander und durch die erfindungsgemäße Verbindung von Laufgangplatten mit Liegemuldenplatten bzw. mit dem Futtertisch 50 ist es auf besonders vorteilhafte Weise möglich, einen Stall ohne Fundament zu errichten. Denn durch die breite Auflage auf der Schotterschicht all dieser Bauteile weist der erfindungsgemäße Stall genügend Stabilität auf, um gegen die auf die Außenwand des Stalls angreifenden Windkräfte zu bestehen. Der erfindungsgemäße Stall ist daher nicht nur vorteilhaft schneller zu errichten, da die Laufgänge und andere Bodenteile aus bereits vorgefertigten erfindungsgemäßen Laufgangplatten aufgebaut werden, sondern vor allem auch dadurch, dass kein Fundament hergestellt werden muss. Erfindungsgemäß reicht es nämlich aus, dass eine Schotterschicht als Unterboden für den Stallboden auf dem Mutterboden verteilt und gegebenenfalls verdichtet wird. Auf dieser Schotterschicht, die einfach zu planieren ist und somit eine gemeinsame im Wesentlichen plane Fläche für die Laufgangplatten und Liegemulden des erfindungsgemäßen Betonfertigteilesystems, wie in Fig. 5 und 6 gezeigt, darstellt, kann das erfindungsgemäße Betonfertigteilesystem einfach und leicht zu einem Stallboden verlegt werden. Der einen solchen Stallboden umfassende erfindungsgemäße Stall ist sowohl hinsichtlich der einfacheren, schnelleren Bauweise, als auch durch die verbesserte Dichtigkeit und Stabilität verbessert. Durch die Verbindung der Laufgangplatten 131 und 132 miteinander und der Laufgangplatten mit den Liegemuldenplatten bzw. dem Futtertisch 330 ist ein solcher Stall auch ohne Fundament genügend stabil (siehe Fig. 5 und 6).

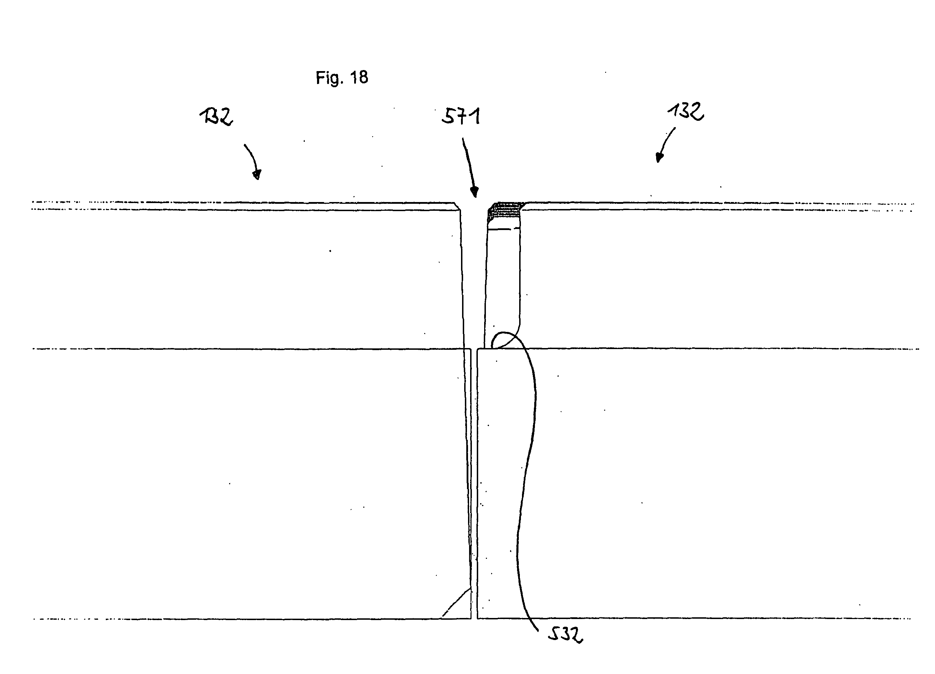

Die Figur 18 zeigt einen Querschnitt durch einen Laufgang von in einer Reihe hintereinander verlegten Laufgangplatten einer weiteren Ausführungsform der Erfindung. Während die Figur 17 eine Ausführungsform zeigt, bei der die hintereinander verlegbaren Laufgangplatten 131 bzw. 132 der Reihen 31 bzw. 32 miteinender verbindbar sind, zeigt die Ausführungsform der Figur 18, dass die hintereinander verlegten Laufgangplatten 132 nicht miteinander verbindbar sind. Der Zusammenhalt und die Dichtigkeit zwischen den Laufgangplatten 132 wird dadurch erreicht, dass jede der Laufgangplatten 132 mit einer Liegemuldenplatte 22 verbunden wird, wie in den Fig. 5 und 14 gezeigt. Eine zusätzliche Abdichtung kann über das Einlegen einer Rundschnur auf den Vorsprung 532 und ein nachfolgendes Vergießen des Spalts 571 mit Vergussmasse zur Ausbildung einer Zweiflankendichtung erfolgen.

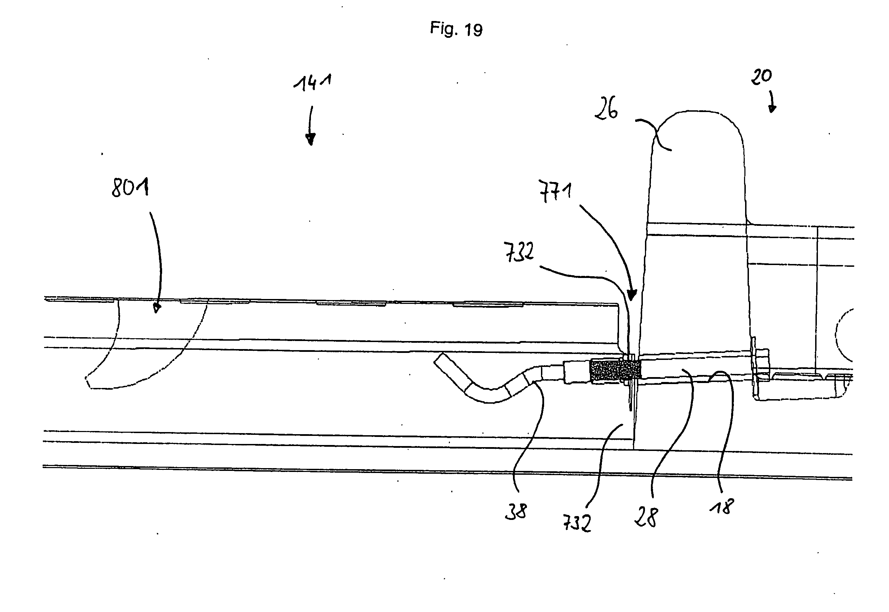

Die Figur 19 zeigt eine Detailansicht einer weiteren Ausführungsform des Querschnitts von Figur 8 nur aus der anderen Richtung des Laufgangs im Vergleich zur Figur 9. Bei der in Figur 19 gezeigten Ausführungsform der Erfindung stößt die Liegemuldenplatte 20 mit der Laufgangplatte 141 zusammen und ist mit ihr verbunden. Die Liegemuldenplatte 20 ist mit der Laufgangplatte 141 über die Schraube 28 verbunden. Die Schraube 28 kann bequem nach einem Verlegen der Liegemuldenplatten und Laufgangplatten eines Stalls durch den in die Liegemulde 11 hineinreichenden Durchgang 18 in die Verankerungshülse 38 geschraubt werden, die in der Laufgangplatte 141 vorgesehen ist. Anstelle der Schraube kann auch ein Verbindungsbolzen oder anderes Befestigungsmittel vorgesehen sein. Nach dem Verbinden kann der Durchgang 18 mit einer Vergussmasse verschlossen und abgedichtet werden. Dadurch wird das Befestigungsmittel noch zusätzlich befestigt. Außerdem wird das Befestigungsmittel dadurch auch vor korrodierenden Einflüssen geschützt. Der über die Laufgangplatte 141 ragende Rand 26 der Liegemuldenplatte 20 ist im Gegensatz zu der Ausführungsform der Fig. 9 nicht über die Laufgangplatte hinausgezogen. Für eine zusätzliche Abdichtung weist die Laufgangplatte 141 jedoch den Vorsprung 732 auf, mit dem die Laufgangplatte 141 gegen die Liegenmuldenplatte 20 stößt. Dadurch wird der Spalt 771 zwischen Laufgangplatte 141 und Liegenmuldenplatte 20 gebildet. Dieser Spalt kann für eine zusätzliche Abdichtung neben der festen Verbindung der Platten durch die Schraube 28 mit einer Rundschnur und Vergussmasse abgedichtet werden. Dazu wird zunächst eine Rundschnur nach dem Verlegen von Laufgangplatten und Liegemuldenplatten in den Spalt 771 eingelegt und danach mit Vergussmasse zur Ausbildung einer Zweiflankendichtung vergossen. Diese Ausführungsform, hat den Vorteil, dass die Liegemuldenplatten und Laufgangplatten unabhängig voneinander ausgetauscht werden können. Damit wird eine Reparatur des Stallbodens eines Stalls besonders stark vereinfacht. Entsprechend kann besonders vorteilhaft auch die Laufgangplatte 142 in der Fig. 5 ausgeformt sein, die mit einem Futtertisch verbindbar sein kann, gemäß einer weiteren Ausführungsform der Erfindung aber auch nur durch eine solche Abdichtung gegen den Futtertisch abgedichtet sein kann. Dadurch können alle Laufgangplatten und Liegemuldenplatten unabhängig voneinander und unabhängig von dem Futtertisch besonders leicht und vorteilhaft ausgetauscht werden. In der Fig. 19 ist auch die gemäß einer besonders bevorzugten Ausführungsform vorgesehene Ausnehmung 801 zur Aufnahme eines Ankers einer Dreipunktaufhängung eines Krans gezeigt. Die Ausnehmung ist gebogen. Dadurch kann ein Anker einer Dreipunktaufhängung eines Krans zur Verlegung der Bodenplatte gut in die Ausnehmung 801 eingreifen, wobei ein Abbrechen und Abplatzen der Kanten der Ausnehmung zur Plattenoberfläche vermieden und weitere scharfe Kanten, die zu Verletzungen führen können vermieden. Besonders bevorzugt sind pro Platte drei solcher Vertiefungen 801 für drei Befestigungsanker einer Dreipunktaufhängung eines Krans vorgesehen. Solche Vertiefungen 801 können auch in den Liegemuldenplatten vorgesehen sein. Nach einem Verlegen können die Vertiefungen besonders bevorzugt mit einer Vergussmasse verschlossen werden.

Durch eine Abdichtung von zusammen stoßenden Platten, von denen mindestens eine einen Vorsprung (z.B. 732 in Fig. 19 bzw. 532 in Fig. 17) aufweist, der durch den Zusammenstoß mit der anderen Platte einen Spalt (771 in Fig. 19) bildet, mit einer Rundschnur (nicht gezeigt), die in den Spalt eingelegt wird, und durch darauffolgendes Vergießen mit Vergussmasse zur Ausbildung einer Zweiflankendichtung in dem Spalt, können alle unterhalb dieser Abdichtung vorgesehenen Befestigungsmittel (z.B. die Schraube 28 in Fig. 19 bzw. das Verbindungselement 90 und die Schrauben 93) besonders vorteilhaft vor korrodierenden Einflüssen durch Harn oder Kot geschützt werden. Dadurch kann vorteilhaft die Langlebigkeit eines erfindungsgemäßen Stalls erhöht werden. Besonders bevorzugt werden auch die Stöße von zusammen stoßenden Liegemuldenplatten durch eine entsprechende Abdichtung (siehe 777 in Fig. 14) an der Seite, an der die Liegemuldenplatten zu einem Laufgang ausgerichtet sind, abgedichtet. Damit keine Harn oder Kot umfassende Flüssigkeit, die Verbindungselemente, die unterhalb der Abdichtungen angeordnet sind, erreichen kann. Wenn die Laufgangplatten durch eine wie oben beschrieben Abdichtung mit Rundschnur und Vergussmasse zur Ausbildung einer Zweiflankendichtung zusätzlich abgedichtet werden, ist es bevorzugt, dass Auflageklötze nach dieser Abdichtung in den Kanal 70 bzw. 71 eingebracht werden auf die Abdichtung. Besonders vorteilhaft werden sie in dem Kanal 70 bzw. 71 eingespreizt.

## Patentansprüche

1. Betonplatte für einen Stallboden mit einer von Rindern begehbaren Oberfläche, die Vertiefungen (2) mit einer Breite aufweist, die im Wesentlichen einer Klauenbreite in Laufrichtung der Rinder entspricht, wobei die Vertiefungen auf der Betonplatte solche Abstände voneinander aufweisen, dass ein Rind im Wesentlichen bei jedem Schritt mit einer Klaue in eine Vertiefung treten kann, wobei die Vertiefungen eine Tiefe von 3 bis 15 mm aufweisen, abgeschrägte Seitenwände (8) besitzen, die gegenüber der Vertikalen eine Neigung von 10° bis 20° aufweisen.

2. Betonplatte nach Anspruch 1, wobei die Vertiefungen eine Länge aufweisen, die größer ist als die Klauenlänge der Rinder in Laufrichtung, und vorzugsweise bis zu etwa die 2,5-fache, besonders bevorzugt bis zu etwa die 1,5-fache, Länge der Auftrittsfläche der Klaue der Rinder in Laufrichtung beträgt, ganz besonders bevorzugt eine Länge von 13 bis 17 cm.

3. Betonplatte nach Anspruch 1 oder 2, wobei die Vertiefungen eine Breite von 5 bis 8 cm, vorzugsweise 5,5 bis 7,5 cm, besonders bevorzugt etwa 6,5 cm, aufweisen.

4. Betonplatte nach einem der vorstehenden Ansprüche, wobei die Vertiefungen durch Stege (6) voneinander getrennt sind, die eine Breite von etwa 3 bis 9 cm, vorzugsweise 5 bis 7 cm, aufweisen.

5. Betonplatte nach einem der vorstehenden Ansprüche, wobei die Vertiefungen abgeschrägte Seitenwände (8) besitzen, die vorzugsweise einfach abgeschrägt sind und gegenüber der Vertikalen eine Neigung von etwa 15°, aufweisen.

6. Betonplatte nach Anspruch 5, wobei die Seitenwände in der Breitenerstreckung (9) zweifach abgeschrägt sind und gegenüber der Vertikalen eine erste Neigung von 20° bis 40° und eine zweite Neigung von 50° bis 70° aufweisen.

7. Betonplatte nach einem der vorstehenden Ansprüche, wobei die Vertiefungen versetzt zueinander angeordnet sind.

8. Stallboden, umfassend eine Betonplatte nach einem der Ansprüche 1 bis 7.

9. Stallboden nach einem der vorstehenden Ansprüche, der mindestens einen Laufgang zwischen zwei Reihen von Liegemulden für Tiere und/oder zwischen einer Reihe von Liegemulden für Tiere und einem Futtertisch umfasst.

10. Stall, umfassend eine Betonplatte nach einem der Ansprüche 1 bis 7 oder einen Stallboden nach einem der Ansprüche 8 bis 9.

11. Verfahren zur Herstellung eines Stalls, umfassend ein Verlegen mindestens einer Betonplatte nach einem der Ansprüche 1 bis 7 und gegebenenfalls ein Verbinden von Betonplatten miteinander und/oder mit ein oder mehr Liegemuldenplatten und/oder mit einem Futtertisch.

12. Verfahren nach Anspruch 11, wobei die Betonplatte(n) nach einem der Ansprüche 1 bis 7 und die Liegemuldenplatten auf einer gemeinsamen im Wesentlichen planen Fläche verlegt werden.

## Claims

1. Concrete slab for a stable floor with a surface walkable by cattle, said surface having recesses (2) with a width that substantially corresponds to a claw width in the walking direction of the cattle, wherein the recesses on the concrete slab have such distances from one another that a cow may step with a claw into a recess upon each step, wherein the recesses have a depth of 3 to 15 mm, and have bevelled side walls (8), which have an inclination of 10° to 20° with respect to the vertical.

2. Concrete slab as claimed in claim 1, wherein the recesses have a length which is larger than the claw length of the cattle in the walking direction, and which is preferably up to approx. 2.5 times, especially preferred up to approx, 1.5 times the length of the tread surface of the claw of the cattle in the walking direction, and especially preferred a length of 13 to 17 cm.

3. Concrete slab as claimed in claim 1 or 2, wherein the recesses have a width of 5 to 8 cm, preferably 5.5 to 7.5 cm, especially preferred approx. 6.5 cm.

4. Concrete slab as claimed in one of the above-mentioned claims, wherein the recesses are separated from one another by webs (6) having a width of approx. 3 to 9 cm, preferably 5 to 7 cm.

5. Concrete slab as claimed in one of the preceding claims, wherein the recesses have bevelled side walls (8) which are bevelled once and have an angle of approx. 15° with respect to the vertical.

6. Concrete slab as claimed in claim 5, wherein the side walls in the width extension (9) are bevelled twice and have a first inclination of 20° to 40° and a second inclination of 50° to 70° with respect to the vertical.

7. Concrete slab as claimed in one of the preceding claims, wherein the recesses are arranged in a manner offset with respect to each other.

8. Stable floor, comprising a concrete slab as claimed in one of claims 1 to 7.

9. Stable floor as claimed in one of the preceding claims, which comprises at least one gangway between two rows of cubicles for animals and/or between a row of cubicles for animals and a forage table.

10. Stable, comprising a concrete slab as claimed in one of claims 1 to 7 or a stable floor as claimed in one of claims 8 to 9.

11. Method for building a stable, comprising the laying of at least one concrete slab as claimed in one of claims 1 to 7 and possibly a connection of concrete slabs with one another and/or comprising one or several cubicle plates and/or comprising a forage table.

12. Method as claimed in claim 11, wherein the concrete slab(s) are laid according to one of claims 1 to 7, and the cubicle plates are laid on a common, substantially planar surface.

## Revendications

1. Panneau de béton pour un sol d'étable ayant une surface pouvant être parcourue par des bovins et qui présente des renfoncements (2) d'une largeur correspondant principalement à une largeur de sabot dans le sens de la marche du bovin, les renfoncements des panneaux de béton présentant des intervalles les uns par rapport aux autres tels qu'un bovin peut essentiellement rentrer avec un sabot à chaque pas dans un renfoncement, les renfoncements présentant une profondeur de 3 à 15 mm, et possédant des parois latérales (8) biseautées présentant une inclinaison par rapport à la verticale de 10° à 20°.

2. Panneau de béton selon la revendication 1, dans lequel les renfoncements présentent une longueur supérieure à la longueur des sabots des bovins dans le sens de la marche, et font de manière préférée jusqu'à environ 2,5 fois, de manière particulièrement préférée jusqu'à environ 1,5 fois la longueur de la surface de marche du sabot du bovin dans le sens de la marche, de manière tout particulièrement préférée une longueur de 13 à 17 cm.

3. Panneau de béton selon la revendication 1 ou 2, dans lequel les renfoncements présentent une largeur de 5 à 8 cm, de manière préférée de 5,5 à 7,5 cm, de manière particulièrement préférée d'environ 6,5 cm.

4. Panneau de béton selon l'une quelconque des revendications précédentes, dans lequel les renfoncements sont séparés les uns des autres par des parties pleines (6) présentant une largeur d'environ 3 à 9 cm, de manière préférée de 5 à 7 cm.

5. Panneau de béton selon l'une quelconque des revendications précédentes, dans lequel les renfoncements possèdent des parois latérales (8) biseautées, qui sont de manière préférée biseautées une fois et présentent une inclinaison d'environ 15° par rapport à la verticale.

6. Panneau de béton selon la revendication 5, dans lequel les parois latérales sont biseautées deux fois dans leur extension transversale (9) et présentent par rapport à la verticale une première inclinaison de 20° à 40° et une deuxième inclinaison de 50° à 70°.

7. Panneau de béton selon l'une quelconque des revendications précédentes, dans lequel les renfoncements sont disposés en quinconce les uns par rapport aux autres.

8. Sol d'étable, comprenant un panneau de béton selon l'une quelconque des revendications 1 à 7.

9. Sol d'étable selon l'une quelconque des revendications précédentes, comprenant au moins un couloir de service entre deux rangées de litières pour animaux et/ou entre une rangée de litières pour animaux et une mangeoire à fourrage.

10. Etable, comprenant un panneau de béton selon l'une quelconque des revendications 1 à 7 ou un sol d'étable selon l'une quelconque des revendications 8 à 9.

11. Procédé de fabrication d'une étable, comprenant une pose d'au moins un panneau de béton selon l'une quelconque des revendications 1 à 7 et le cas échéant un raccordement de panneaux de béton les uns avec les autres et/ou avec un ou plus d'un panneau de litière et/ou avec une mangeoire à fourrage.

12. Procédé selon la revendication 11, dans lequel le(s) panneau(x) de béton selon l'une quelconque des revendications 1 à 7 et les panneaux de litières sont posés sur une surface commune essentiellement plane.
